# EUROPEAN PATENT APPLICATION

(11) **EP 2 216 785 A1**
(43) Date of publication of application: **11.08.2010**
(21) Application number: 08847440.8
(22) Date of filing: 05.11.2008
(51) Int. Cl.: G11B 23/40, B41J 2/18, B41J 2/185

(54) **DISC DEVICE**

(30) Priority: 09.11.2007 JP 2007292585; 30.04.2008 JP 2008119006
(71) Applicant: Sony Corporation, Tokyo 108-0075 (JP)
(72) Inventor: IKEMOTO, Yuichiro, Tokyo 108-0075 (JP); KOBAYASHI, Seiji, Tokyo 108-0075 (JP); ASHIZAKI, Koji, Tokyo 108-0075 (JP); MATSUI, Takeshi, Tokyo 108-0075 (JP); ITO, Tatsumi, Tokyo 108-0075 (JP); TANAKA, Shintaro, Tokyo 108-0075 (JP)
(74) Representative: Turner, James Arthur
(86) International application number: PCT/JP2008/070113
(87) International publication number: WO 2009/060854

(57) **Abstract**

According to the present invention, provided is a disc device including a disc mounting unit having a mounting surface, on which a disc-like recording medium is mounted; a print head for discharging ink towards a label surface of the disc-like recording medium mounted on the disc mounting unit; and a mist inducing unit for inducing the ink discharged from the print head when applied with a predetermined voltage.

## Description

### Technical Field

The present invention relates to a disc device having a label printing function of printing on a label surface of a disc-like recording medium.

### Background Art

In recent years, disc devices such as an optical disc device that uses a recording medium such as a BD (Blu-ray Disk) and a HD-DVD (High Definition Digital Versatile Disk) enabling high density recording is increasing. From such circumstances, characters, images, and the like corresponding to the information recorded in the recording medium are printed (hereinafter referred to as "label printing") on a label surface on the side opposite to the recording surface of the disc-like recording medium such as the optical disc to manage the recording media recorded with great amount of information.

An optical disc device having an inkjet head mounted on an optical disc drive to perform label printing on a rotating optical disc is proposed (see e.g., patent literature 1) as a device for realizing label printing in the disc device.

In the related art, in an inkjet type printing device for a printing medium such as paper, and not only the optical disc, mist (liquid droplet) that floats without reaching the printing surface generates in the space between the print head and the printing object when ink droplets are discharged from the print head. Such mist loses speed by air resistance when discharged from the print head, and floats by riding on the surrounding air current. Thus, if the floating mist scatters in various directions, the mist may attach other than to the printing surface thereby contaminating the interior of the device.

One countermeasure for such issue in the inkjet type printing device is as disclosed in patent literature 2. Patent literature 2 describes a recording device for performing recording with the ink liquid droplets ejected from a recording head, or one part thereof, controlled or collected by electrostatic force in the inkjet recording device. The inkjet recording device (referred to as first related art example) described in patent literature 2 includes an inkjet recording head, a first electrode, a second electrode, and a voltage control means. The inkjet recording head includes an ejection port for ejecting the ink liquid droplets, and an energy generation means for ejecting the ink in the ejection port. The first electrode is arranged electrically conducted with the ink in the ejection port. The second electrode is arranged facing the ejection port while being spaced apart from the ejection port by a predetermined distance. The voltage control means applies a first voltage to between the first and second electrodes during a time from when the ink starts to be ejected from the ejection port until separated into two or more ink liquid droplets during the ejection, and immediately thereafter, applies a second voltage having the same polarity as the first voltage and having an absolute value smaller than the first voltage.

Another example of a countermeasure for the above issue is as described in patent literature 3. Patent literature 3 describes an inkjet recording device for recording images by discharging recording liquid droplets such as ink on the recording medium. The inkjet recording device (referred to as second related art example) described in patent literature 3 is a device for recording images by discharging recording liquid droplets on the recording medium, and includes means for blowing air to the recording region, and an air intake means, arranged on the side opposite to the blowing means by way of the recording region, for taking in air.

### Citation List

### Patent Literature

Patent Literature 1: Japanese Patent Application Laid-Open No.H5-23 8005
Patent Literature 2: Japanese Patent Application Laid-Open No.H5-124187
Patent Literature 3: Japanese Patent Application Laid-Open No.2002-307725

### Summary of Invention

### Technical Problem

However, in the case of the first related art example and the second related art example described above, a printing method (so-called XY printing method) of translation moving the print head for main scanning and moving the printing target object for sub-scanning to have the main scanning and the sub-scanning orthogonal is adopted. In such printing method, the print head is to be moved by a distance corresponding to the width of the printing target object, and thus a mist adsorbing mechanism is to be desirably arranged in the entire movement range of the print head.

Furthermore, since the movement of the print head in the main scanning is a reciprocating movement, the scattered state of the mist during the reciprocating movement of the print head is different for outward path and homeward path of the print head. Thus, in the case of the first related art example and the second related art example described above, the mist adsorbing mechanism may not effectively function. As a result, the mist of the ink droplets generated in time of printing is not reliably adsorbed, whereby the peripheral portions may be contaminated by such mist. Thus, if such printing device is mounted on the optical disc device, the mist attaches to and contaminates the movable portions and the optical system of the optical pickup, which may cause the readout and write of information signals to become difficult thereby leading to degradation in the recording and reproducing performance.

The present invention is made in view of the above-mentioned issue, and aims to provide a disc device which has a label printing function of printing on the label surface of the disc-like recording medium, where the contamination in the disc drive due to scattering of the mist is prevented by reliably adsorbing the mist of the ink droplets generated in time of printing.

### Solution to Problem

According to an aspect of the present invention in order to achieve the above-mentioned object, there is provided a disc device including:
a disc mounting unit having a mounting surface, on which a disc-like recording medium is mounted;
a print head for discharging ink towards a label surface on a side opposite to a recording surface of the disc-like recording medium mounted on the disc mounting unit; and
a mist inducing unit for inducing mist of the ink discharged from the print head when applied with a predetermined voltage.

In the disc device, the mist inducing unit may include an electrode to be applied with the predetermined voltage.

In this case, the electrode may induce the mist of the ink discharged from the print head to attach the mist to the surface of the electrode and collect the mist.

Further, the electrode is preferably arranged on a downstream side in a rotating direction of the disc-like recording medium with respect to an ink discharge portion of the print head.

Further, the disc mounting unit may be a ground potential.

Further, the disc device may further include a pickup device for recording and/or reproducing information with respect to the recording surface of the disc-like recording medium mounted on the disc mounting unit. The pickup device may include an objective lens for collecting a laser light emitted from a light source and irradiating the recording surface of the disc-like recording medium with the laser light, an actuator for performing a focusing control and a tracking control of the objective lens, and a cover for covering the actuator. In this case, the cover may be a ground potential, a potential having the same polarity as the electrode, or a potential having an opposite polarity from the electrode.

Further, voltage may be applied to the electrode so that an intensity of an electric field generated in a region between the electrode and the disc mounting unit is greater than or equal to 200 kV/m.

Further, the electrode may be arranged on an upper side of the ink discharge portion.

Further, the electrode may be arranged at a position facing an ink discharge portion of the print head by way of the disc-like recording medium.

In this case, the ink discharge portion may be a ground potential.

According to the disc device of the present invention having the above configuration, the ink mist floating inside the disc drive can be induced and the ink can be attached to the desired position by arranging the mist inducing unit for inducing the ink discharged from the print head through application of a predetermined voltage. Therefore, according to the present invention, the contamination of the interior of the disc drive by the scattering of the ink mist can be prevented.

### Advantageous Effects of Invention

According to the present invention, in the disc device having the label printing function of printing on the label surface of the disc-like recording medium, the contamination of the interior of the disc drive by the scattering of the ink mist can be prevented by arranging the mist inducing unit for inducing the mist of the ink droplets discharged from the print head through application of a predetermined voltage.

### Brief Description of Drawings

[Fig. 1] Fig. 1 is a perspective view showing an outer appearance configuration of a disc device according to a first embodiment of the present invention.
[Fig. 2] Fig. 2 is a perspective view showing an internal configuration of the optical disc device according to the embodiment.
[Fig. 3] Fig. 3 is a plan view showing an internal configuration of the optical disc device according to the embodiment.
[Fig. 4] Fig. 4 is a perspective view showing a state in which a printing device is removed from the optical disc device according to the embodiment.
[Fig. 5] Fig. 5 is a perspective view showing a state in which the printing device is arranged in the optical disc device according to the embodiment.
[Fig. 6] Fig. 6 is an explanatory view describing a positional relationship of a print head, an optical pickup of the disc drive device, and the optical disc of the printing device according to the embodiment.
[Fig. 7] Fig. 7 is a side view describing a positional relationship of the print head, the optical pickup of the disc drive device, and the optical disc of the printing device according to the embodiment.
[Fig. 8] Fig. 8 is an explanatory view showing a cross-section cut along a line W-W of a print head assembly shown in Fig. 7.
[Fig. 9] Fig. 9 is a perspective view seen from an ink discharge portion side of the print head assembly of the printing device according to the embodiment.
[Fig. 10] Fig. 10 is a block diagram showing a schematic configuration of a control unit of the disc device according to the embodiment.
[Fig. 11] Fig. 11 is an explanatory view showing the flow of air generated when the disc-like recording medium according to the embodiment is rotatably driven.
[Fig. 12A] Fig. 12A is an explanatory view showing a state in which the ink droplet is discharged from the print head of the disc device according to the embodiment, and shows a state in which the disc-like recording medium is not rotating.
[Fig. 12B] Fig. 12B is an explanatory view showing a state in which the ink droplet is discharged from the print head of the disc device according to the embodiment, and shows a state in which the disc-like recording medium is rotatably driven.
[Fig. 13] Fig. 13 is an explanatory view showing one example of the behavior of the ink by application of high voltage.
[Fig. 14A] Fig. 14A is a side view showing a configuration of an experiment device for checking the effect of preventing contamination in the drive by the scattering of the ink mist.
[Fig. 14B] Fig. 14B is a plan view showing a configuration of an experiment device for checking the effect of preventing contamination in the drive by the scattering of the ink mist.
[Fig. 15] Fig. 15 is a photograph showing the experimental result for checking the effect of preventing contamination in the drive by the scattering of the ink mist.
[Fig. 16] Fig. 16 is an explanatory view showing a configuration of the disc device according to the first embodiment of the present invention.
[Fig. 17] Fig. 17 is a cross-sectional view showing an electrode plate configuring a mist inducing unit according to the embodiment.
[Fig. 18] Fig. 18 is an explanatory view showing an adsorbing operation of the mist by the mist inducing unit in the disc device according to the present embodiment.
[Fig. 19A] Fig. 19A is a perspective view showing a state of the flow of ink mist when printing an outer circumferential side of an optical disc in the optical disc device according to the embodiment.
[Fig. 19B] Fig. 19B is a plan view showing a state of the flow of ink mist when printing an outer circumferential side of an optical disc in the optical disc device according to the embodiment.
[Fig. 20A] Fig. 20A is a perspective view showing a state of the flow of ink mist when printing an inner circumferential side of an optical disc in the optical disc device according to the embodiment.
[Fig. 20B] Fig. 20B is a plan view showing a state of the flow of ink mist when printing an inner circumferential side of an optical disc in the optical disc device according to the embodiment.
[Fig. 21] Fig. 21 is an explanatory view showing the configuration of the optical disc device serving as a first example of the disc device according to the embodiment.
[Fig. 22] Fig. 22 is an explanatory view showing the configuration of the optical disc device serving as a second example of the disc device according to the embodiment.
[Fig. 23] Fig. 23 is an explanatory view showing the configuration of the optical disc device serving as a third example of the disc device according to the embodiment.
[Fig. 24] Fig. 24 is an explanatory view showing a state of flow of mist in the disc device according to the embodiment.
[Fig. 25] Fig. 25 is an explanatory view showing a state of flow of mist in the disc device according to the embodiment.
[Fig. 26] Fig. 26 is an explanatory view showing a state of flow of mist in the disc device according to the embodiment.
[Fig. 27] Fig. 27 is a perspective view showing one example of a configuration of a general optical pickup.
[Fig. 28] Fig. 28 is an explanatory view showing a configuration of an optical disc device serving as a first example of the disc device according to a second embodiment of the present invention.
[Fig. 29] Fig. 29 is an explanatory view showing a configuration of an optical disc device serving as a second example of the disc device according to the embodiment of the present invention.
[Fig. 30] Fig. 30 is an explanatory view showing a configuration of an optical disc device serving as a third example of the disc device according to the embodiment of the present invention.
[Fig. 31] Fig. 31 is a side view showing the configuration of the disc device according to a third embodiment of the present invention.
[Fig. 32] Fig. 32 is an explanatory view showing the behavior of the ink droplets discharged from the ink discharge portion according to the embodiment, and shows an example where the mist inducing unit is not arranged.
[Fig. 33] Fig. 33 is an explanatory view showing the behavior of the ink droplets discharged from the ink discharge portion according to the embodiment, and shows an example where the mist inducing unit is arranged.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

### (Configuration of disc device according to first embodiment of the present invention)

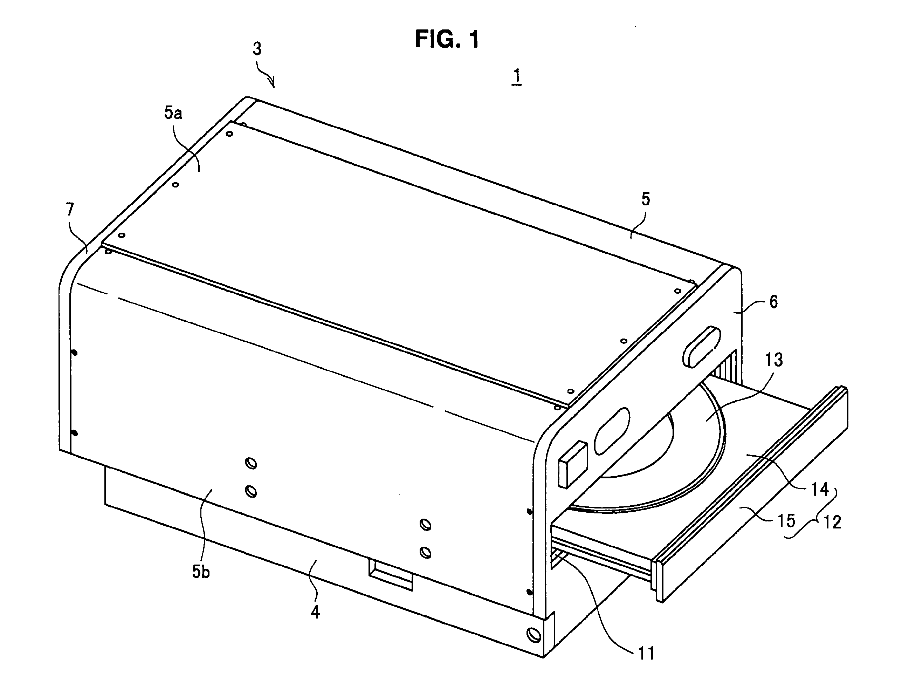

An optical disc device 1 is given as an example of a disc device according to a first embodiment of the present invention, and the configuration of the optical disc device 1 will be described with reference to Fig. 1 to Fig. 10.

The optical disc device 1 according to the present embodiment can record (write) new information signals or reproduce (readout) information signals recorded in advance with respect to an information recording surface (hereinafter sometimes simply referred to as "recording surface") of an optical disc 2 serving as a disc-like recording medium which is a printing object such as an optical disc including a CD (Compact Disc, registered trademark), a CD-R (Recordable), DVD (Digital Versatile Disc, registered trademark), a DVD-RW (Rewritable), a BD (Blu-ray Disc, registered trademark), and a HD-DVD (High Definition-DVD); a magnetic optical disc, a magnetic disc, and the like. The optical disc device 1 is a tray type recording and reproducing device having a printing function capable of printing visible information such as characters, symbols, photographs, pictures, patterns, and the like on the label surface of the optical disc 2 serving as a printing surface.

However, the disc device according to the present invention is not limited to the optical disc device capable of performing both recordation and reproduction of information, and may be applied to a disc recording device capable of performing only the recordation of information signals, and a disc reproducing device capable of performing only the reproduction of information signals. The disc-like recording medium according to the present invention is not limited to the optical disc of recording and reproducing information signals using a laser light. In other words, the disc recording device according to the present invention can use various types of disc-like recording media, in which the outer shape is a disc-shape, as a recording media such as an optical disc using a near field light, a magnetic optical disc using light and magnetism, and a magnetic disc using only magnetism.

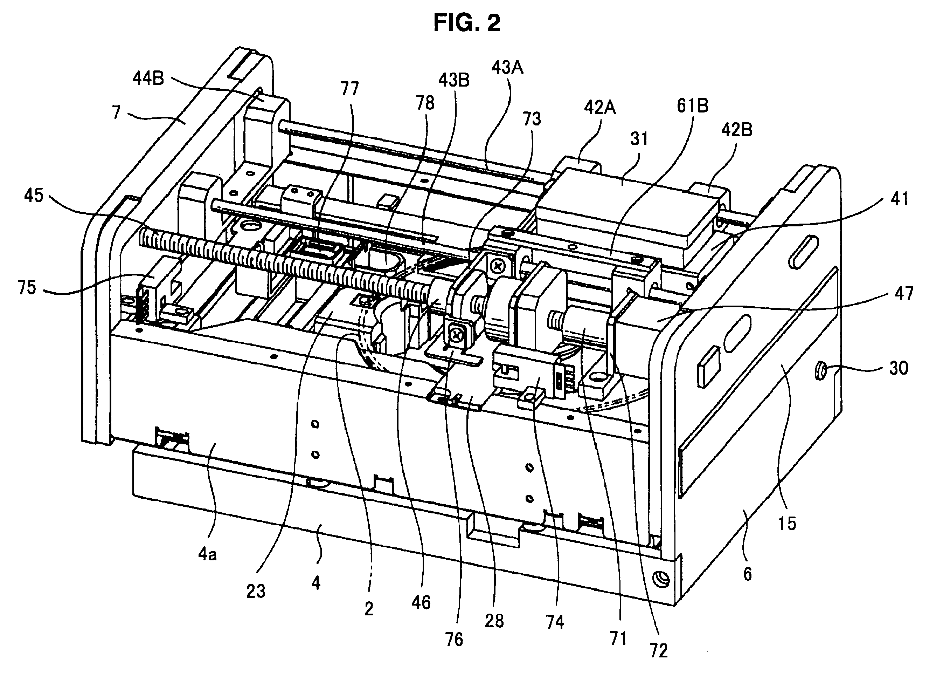

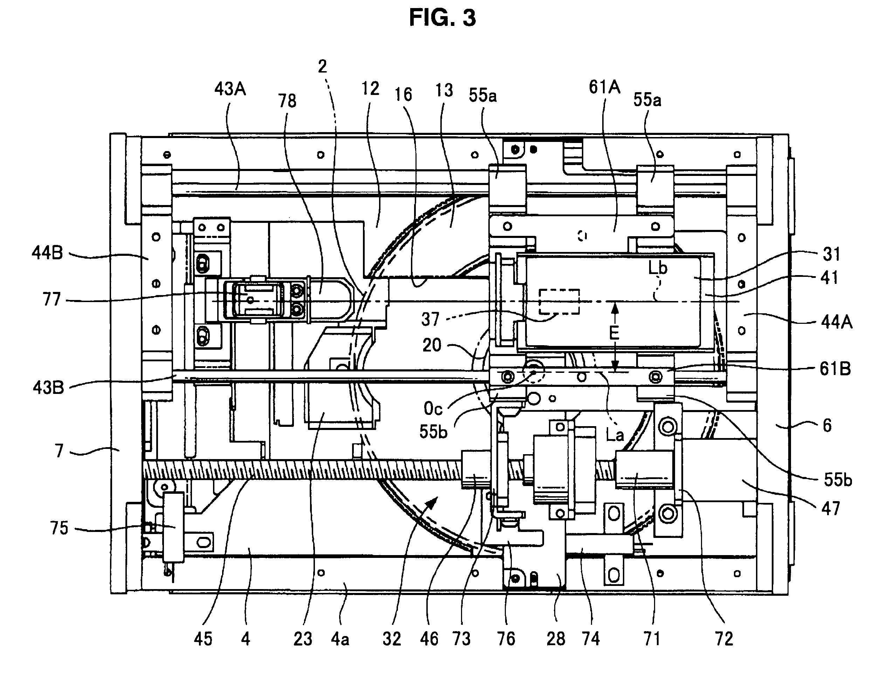

The outline of the configuration of the optical disc device 1 will be described first with reference to Fig. 1 to Fig. 3. Fig. 1 is a perspective view showing an outer appearance configuration of the optical disc device 1 according to the present embodiment. Fig. 2 is a perspective view showing an internal configuration of the optical disc device 1, and Fig. 3 is a plan view showing an internal configuration of the optical disc device 1.

As shown in Fig. 1 to Fig. 3, the optical disc device 1 includes a housing 3 made of a hollow container, a device main body housed in the housing 3, an input device such as a remote controller (not shown), and the like. The optical disc device 1 enables an external device such as an image display device and an audio output device (not shown) to be electrically connected, so that information read out from an information recording unit of the optical disc 2 can be displayed in images, audio, and the like. The image display device can include a liquid crystal display device, an organic EL display device, a plasma display device, and the like. The audio output device can include a speaker device, and the like.

The housing 3 of the optical disc device 1 includes a rectangular base plate 4, an upper surface plate 5 for covering the upper surface of the base plate 4, a front surface plate 6 for covering the front surface, and a rear surface plate 7 for covering the rear surface, and is entirely configured as a hollow container. Side surface portions 4a, 4a are arranged on both sides in the width direction of the base plate 4 of the housing 3. Each side surface portion 4a extends in a longitudinal direction of the base plate 4 at a predetermined height. The upper surface plate 5 includes a rectangular upper surface portion 5a, and left and right side surface portions 5b, 5b, formed in continuation to both sides in the width direction of the upper surface portion 5a, for covering the side surfaces. The upper surface plate 5 is attached to the upper part of the base plate 4, and is attached by fixing both side surface portions 5b, 5b to the respective side surface portions 4a, 4a with fixing screws (not shown). A tubular front side opening, which is formed by the upper surface plate 5 and the base plate 4, is closed by the front surface plate 6, and a back side opening is closed by the rear surface plate 7. The front surface plate 6 and the rear surface plate 7 are screw-fixed to the base plate 4 and the upper surface plate 5 with the fixing screws (not shown).

A disc insert/eject port 11 extending in a lateral direction is arranged at substantially the central part in the height direction of the front surface plate 6. A disc tray 12 serving as a disc mounting unit according to the present embodiment is attached to the disc insert/eject port 11 in a manner enabling insertion and ejection. The disc tray 12 selectively conveys the optical disc 2 mounted on a disc mounting surface 13 to a disc retrieval position at outside the housing 3, and a disc attachment position in the housing 3 at where the recording (write) and reproduction (readout) of the information signals are executed with respect to the optical disc 2. The disc tray 12 includes a tray main body 14 made of a plate-shaped member having a rectangular plane slightly larger than the optical disc 2, and a shielding plate 15 fixed at one end in the longitudinal direction of the tray main body 14. The disc mounting surface 13 including a circular recess for accommodating the optical disc 2 is arranged at the upper surface, which is one of the planes of the tray main body 14.

A cutout 16 for avoiding contacting with the disc attachment unit, to be described later, is formed in the tray main body 14. The cutout 16 is formed by greatly cutting from one short side of the disc tray 12 to the central part of the disc mounting surface 13. The shielding plate 15 is integrally arranged at the short side on the side opposite to the cutout 16 of the tray main body 14. The shielding plate 15 functions as a lid for closing the disc insert/eject port 11 when the disc tray 12 is moved to the disc attachment position. The shielding plate 15 is formed to a horizontally long rectangle that conforms to the shape of the disc insert/eject port 11, and is removably fitted to the disc insert/eject port 11.

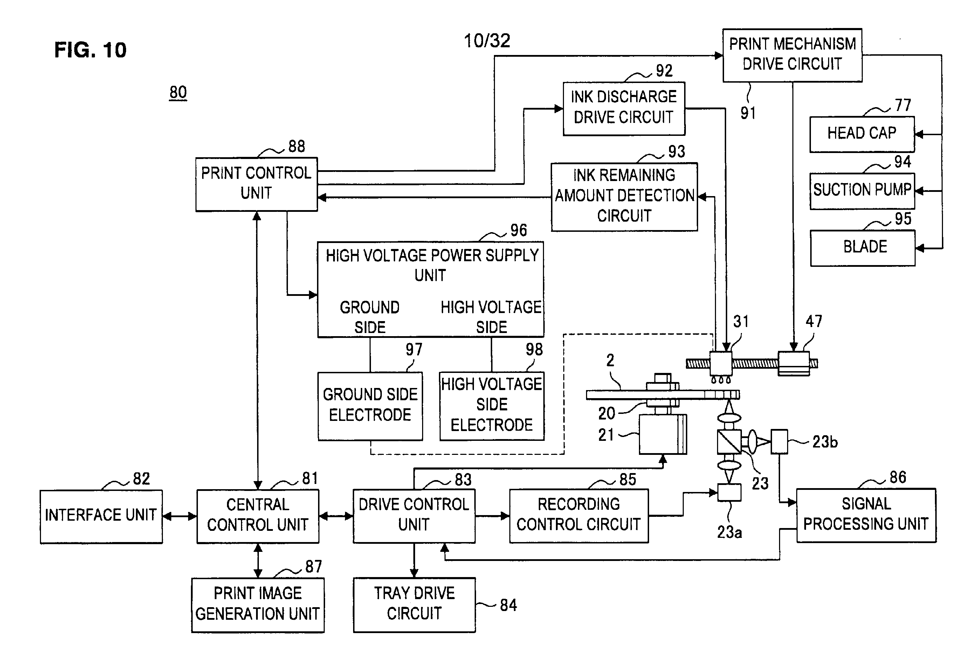

The device main body 8 of the optical disc device 1 is configured to include a disc drive device 9, a printing device 10, and a control device 80 (see Fig. 10). The disc drive device 9 writes information signals to the information recording unit of the provided optical disc 2 to newly record information, or reads out the information recorded in advance in the information recording unit to reproduce the information. The printing device 10 prints and displays matters related to the information recorded in advance in the information recording unit and the newly recorded information as visible information such as characters, numbers, photographs, pictures, and patterns on the label surface of the provided optical disc 2, the label sheet attached to the label surface, and the like. The control device 80 drive controls the disc drive device 9 and the printing device 10 as well as other devices, as may be necessary, to cause the disc drive device 9 to execute a predetermined recording and reproducing operation and other operations, and to cause the printing device 10 to execute a predetermined printing operation and other operations.

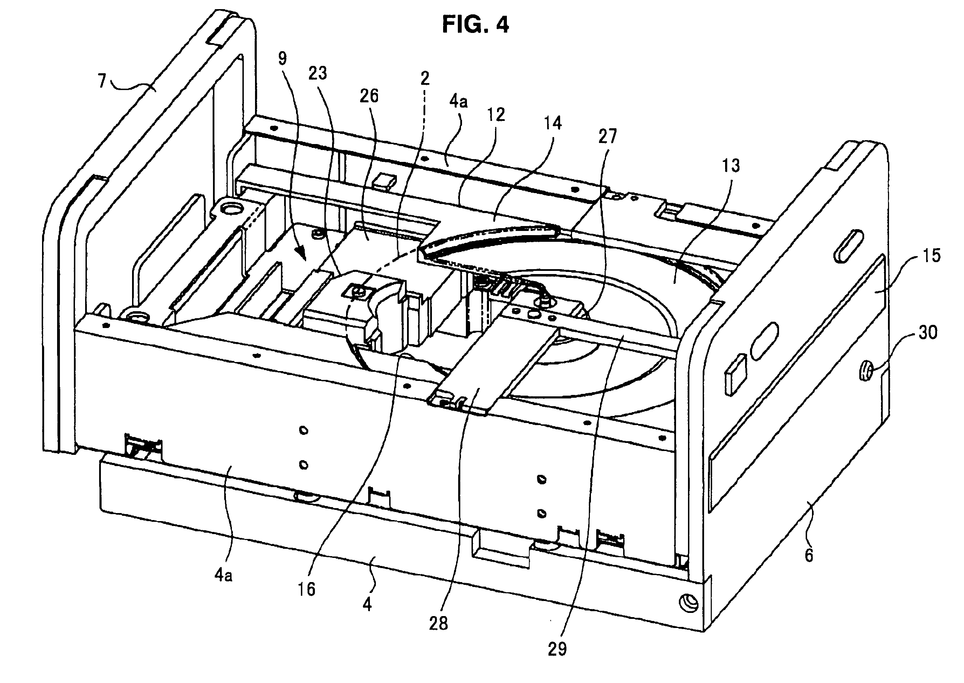

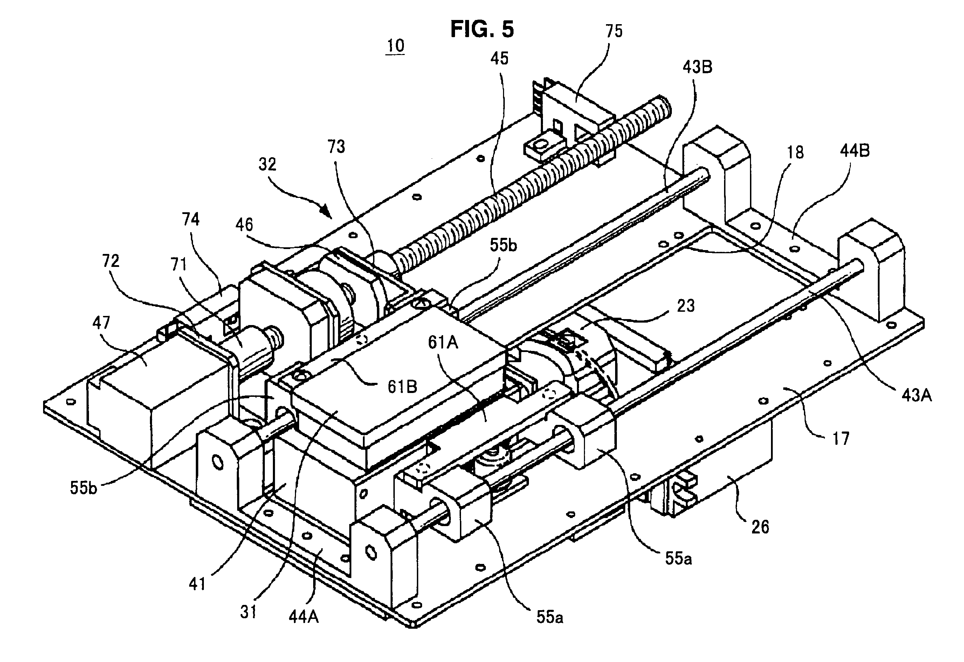

Fig. 4 is a perspective view showing a state in which the printing device 10 is removed from the optical disc device 1 shown in Fig. 2. In the present embodiment, the disc drive device 9 is arranged at the lower side in the housing 3, and the printing device 10 is arranged at the upper side in the housing 3. To realize such arrangement, a chassis plate 17 that partitions the space in the up and down direction is arranged inside the housing 3. Fig. 5 is a perspective view showing a state in which the printing device 10 is mounted on the chassis plate 17. The chassis plate 17 includes a rectangular plate body slightly smaller than the base plate 4, where a rectangular open hole 18 extending in the longitudinal direction at a predetermined width is formed inside to pass the front and back surfaces. The printing device 10 is mounted on the upper surface, which is one of the surfaces, of the chassis plate 17, and the disc drive device 9 is arranged with a predetermined gap with the lower surface or the other surface. The front surface plate 6 includes an eject button 30 for causing a tray conveyance mechanism to perform the ejection operation.

The disc drive device 9 has a configuration similar that which is generally used in this type of optical disc device, and thus the configuration or the like will only be briefly described. The disc drive device 9 includes a disc rotation mechanism, an attachment unit raising/lowering mechanism, an optical pickup 23 showing one specific example of the pickup device, a pickup movement mechanism, a drive control circuit, and the like. The disc rotation mechanism includes a disc attachment unit 20 (see Fig. 3), to which the optical disc 2 is removably attached. The attachment unit raising/lowering mechanism raises/lowers the disc attachment unit 20 to perform chucking and release operation of the optical disc 2. The optical pickup 23 records and reproduces the information signals with respect to the optical disc 2. The pickup movement mechanism moves the optical pickup 23 in the radial direction of the optical disc 2. The drive control circuit drive controls the mechanism described above. Each configuration will be described in detail below.

The disc rotation mechanism is configured by a spindle motor that uses a stepping motor and a DC servo motor, and a turntable fixed to a rotation shaft of the spindle motor. The turntable configures the disc attachment unit 20, to which the optical disc 2 is removably attached. The stepping motor attached with the turntable is arranged to be positioned at substantially the central part of the disc mounting surface 13 when the disc tray 12 is conveyed to the disc attachment position. The turntable includes a disc fit-in portion to be removably fitted to a center hole of the optical disc 2, and a disc mounting unit for supporting the periphery of the center hole.

The attachment unit raising/lowering mechanism attaches the optical disc 2 to the turntable or releases the attachment thereof by raising/lowering the disc rotation mechanism at the disc attachment position. The attachment unit raising/lowering mechanism is configured by a motor base, which is mounted with the spindle motor and which is supported in an oscillating manner by the base plate 4 of the housing 3, a cam mechanism for oscillating the motor base, an electric motor for raising and lowering the spindle motor by operating the cam mechanism, and the like. A chucking plate 27 is arranged on the upper side of the spindle motor. The chucking plate 27 absorbs the optical disc 2 lifted up by the raising/lowering operation of the spindle motor with a magnet built in the turntable, and pushes the same from above. The optical disc 2 is sandwiched by the chucking plate and the turntable, so that the optical disc 2 is prevented from slipping out from the turntable or sliding on the turntable.

The chucking plate 27 is rotatably supported by a plate supporting plate 28 fixed to the upper end edge of the side surface portion 4a of the base plate 4. The plate supporting plate 28 is made of a rectangular plate-shaped member, where the chucking plate 27 is rotatably supported at one side in the longitudinal direction. The plate supporting plate 28 is attached in a cantilever form by fixing the other side in the longitudinal direction to the upper end edge of the side surface portion 4a of the base plate 4. The plate supporting plate 28 is supported by an auxiliary plate 29 and is supported so as to be less likely to bend. The position of the chucking plate 27 supported by the plate supporting plate 28 is the disc attachment position where recording (write) and reproduction (readout) of the information signals by the optical pickup up 23 are performed with respect to the optical disc 2.

The disc tray 12 can be conveyed by the tray conveyance mechanism between the disc attachment position and the disc retrieval position at outside the housing 3. The tray conveyance mechanism has a configuration similar to that which is generally used in this type of optical disc device, and thus the configuration or the like will only be briefly described. The tray conveyance mechanism is configured by a rack portion arranged in the disc tray 12, a pinion that gears with the rack portion, an electric motor for rotatably driving the pinion, and the like. When the electric motor is driven to rotate the pinion, the rotational force thereof is transmitted to the rack portion. The disc tray 12 is thereby conveyed from the disc attachment position to the disc retrieval position, or conveyed from the disc retrieval position to the disc attachment position according to the rotating direction of the electric motor.

During the operation of the tray conveyance mechanism, the optical pickup 23 of the disc drive device 9, and in particular, the objective lens that faces the information recording unit of the optical disc 2, and the vicinity thereof enters the cutout 16 of the disc tray 12. When the optical disc 2 mounted on the disc mounting surface 13 of the disc tray 12 is attached to the turntable and lifted up by a predetermined amount, the optical pickup 23 enters the lower side of the optical disc 2. The write and readout of the information signals with respect to the information recording unit of the optical disc 2 by the optical pickup 23 are thereby enabled.

When the disc tray 12 is conveyed to the disc attachment position in such manner, the spindle motor is moved to the upper side by raising the motor base with the attachment unit raising/lowering mechanism. In this case, the disc fit-in portion of the turntable is fitted to the center hole of the optical disc 2, and the optical disc 2 is lifted by a predetermined distance from the disc mounting surface 13. The chucking plate is absorbed by the magnet built in the turntable, so that the optical disc 2 is sandwiched by the chucking plate and the turntable. The attachment unit raising/lowering mechanism is operated in the reverse direction to lower the motor base so that the disc fit-in portion of the turntable slips out from the lower side from the center hole of the optical disc 2. The optical disc 2 thereby slips out from the turntable and is mounted on the disc mounting surface 13.

The optical pickup 23 includes a light detector, an objective lens, a two-axial actuator for facing the objective lens to the information recording unit of the optical disc 2, and the like. The light detector of the optical pickup 23 is configured by a semiconductor laser, which is a light source for emitting a light beam, a light receiving element for receiving the returning light beam, and the like. The optical pickup 23 emits the light beam from the semiconductor laser and collects light beam with the objective lens to irradiate the light beam on the information recording unit of the optical disc 2, and receives the returning light beam reflected by the information recording unit with the light detector. The optical pickup 23 can record (write) the information signals to the information recording unit, and reproduce (readout) the information signals recorded in the information recording unit in advance.

The optical pickup 23 is mounted on a slide member 26, and integrally moves with the slide member 26. The slide member 26 has two guide shafts (not shown) slidably inserted while being parallel to each other. The two guide shafts are arranged substantially parallel to the main surface, which is the front surface, of the information recording unit of the optical disc 2, and are extended in the movement direction of the disc tray 12. The slide member 26 slidably held by the two guide shafts is movable in the radial direction of the optical disc 2 by the pickup movement mechanism.

A feed screw mechanism including a combination of a set of a feed screw and a feed nut may be applied for the pickup movement mechanism. However, the pickup movement mechanism is not limited to the feed screw mechanism, and other mechanisms such as a rack-pinion mechanism, a belt feed mechanism, and a wire feed mechanism may be applied. The recordation and reproduction process of the information signals by the optical pickup 23 with respect to the information recording unit of the optical disc 2 are executed during the movement of the slide member 26 moved by the pickup movement mechanism.

As shown in Fig. 2 and Fig. 3, the printing device 10 of the optical disc device 1 is configured to include a print head 31 accommodating the ink tank, a head movement mechanism 32 for moving the print head 31 along the printing surface of the optical disc 2, a distance detection unit (not shown) for detecting the distance between the print head 31 and the printing surface, a cleaning mechanism (not shown) for cleaning the detection element or the like of the distance detection unit, a printing or the like control circuit (not shown) for controlling the operation of the print head 31, the head movement mechanism 32, the distance detection unit, and the cleaning mechanism, and the like.

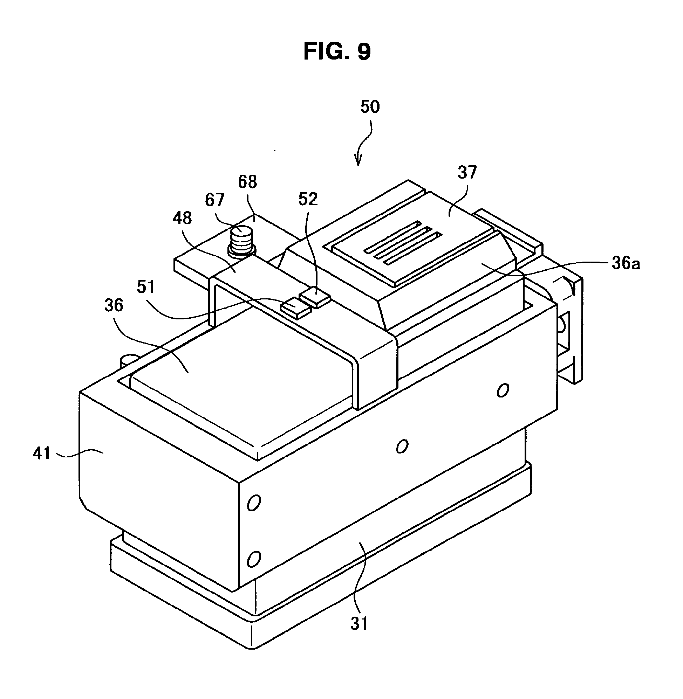

The print head 31 has a configuration shown in Fig. 9. Fig. 9 shows an inkjet type print head 31 used for label printing, where the ink tank portion and the ink discharge portion are integrally configured.

The print head 31 shown in Fig. 9 includes one hollow head housing 36, where an ink tank with an accommodating portion of one color (e.g., black) or two or more colors (e.g., three colors of magenta, cyan, yellow, or the like), and an ink discharge mechanism for individually discharging each color from the nozzle are accommodated inside the head housing 36. The head housing 36 is configured by arranging a bulging portion 36a of a rectangular solid shape at substantially half of the longitudinal direction of one surface of the rectangular solid body. An ink discharge portion 37 for discharging ink is arranged at substantially the central part of the bulging portion 36a. The ink discharge portion 37 includes nozzles made of great number of holes of fine diameter (a few hundred holes having a diameter of between a few µm to a few dozen µm), which nozzles are arrayed as rows of the same number as the number of colors used. For instance, three rows of nozzles are arranged with the print head using three colors of magenta, cyan, and yellow.

The print head 31 having such configuration is arranged movable along the printing surface of the optical disc 2 by the head movement mechanism 32. The head movement mechanism 32 includes a head holder 41 for holding the print head 31, a head slider 42 for movably supporting the head holder 41, two head guide shafts 43A, 43B for movably supporting the head slider 42, two guide bearings 44A, 44B for fixing and supporting the two head guide shafts 43A, 43B, a feed screw shaft 45 and a feed nut 46 for moving the print head 31, a head feeding motor 47 for rotatably driving the feed screw shaft 45, and the like.

The head holder 41 is a member forming a substantially square frame shape to which the print head 31 is fitted. Fig. 9 is an explanatory view of a print head assembly 50 seen from the ink discharger portion 37 side of the print head 31, where the print head assembly 50 is configured by fitting the print head 31 to the head holder 41. In time of the assembly of the print head 31, the ink discharge portion 37 passes through the head holder 41, and projects out to the lower side from the lower surface 41a, which is one surface of the head holder. An attachment bracket 48 being formed to a substantially horseshoe shape and forming a gate shape projecting out to the lower side is arranged at the lower surface 41a of the head holder 41.

Two distance detection sensors 51, 52, which is a first distance detection sensor 51 and a second distance detection sensor 52, serving as a distance detection unit are arranged and fixed side by side at substantially the central part of the lower surface of the attachment bracket 48. The first and second distance detection sensors 51, 52 detect the distance between the surface of the ink discharge portion 37 of the print head 31 and the printing surface of the optical disc 2 attached and rotated by the disc attachment unit 20. The first and second distance detection sensors 51, 52 may be any type that can detect the distance S between the ink discharge portion 37 and the printing surface of the optical disc 2, but are suitably a reflection type photo-interrupter.

The photo-interrupter is an optical sensor, in which a light emitting diode (LED) and a photodiode form a set, which mainly uses an infrared light. The photo-interrupter includes a reflection type and a transmissive type, where the reflection type can be used in the present invention. The reflection type photo-interrupter emits light from the LED and detects the reflected light or the like with the photodiode to examine the reflectivity of light of the object, so that the distance with the object can be accurately detected. A specific example of the reflection type photo-interrupter can include a reflection type photo-interrupter SG-105 manufactured by Kodenshi Co. The reflection type photo-interrupter SG-105 has a light emitting element and a light receiving element arranged on the same plane, and can detect the distance to the object by the reflected light of the detection object.

The two distance detection sensors 51, 52 are arranged side by side on the inner side in the radial direction of the optical disc 2 with respect to the ink discharge portion 37 of the print head 31 and on the upstream side in the rotating direction of the optical disc 2. The two distance detection sensors 51, 52 are arranged on the upstream side in the rotating direction of the optical disc 2 so that when part of the ink discharged from the ink discharge portion 37 becomes a mist and floats in the air, such mist becomes hard to attach to the detection unit of the distance detection sensors. In the example, the two distance detection sensors 51, 52 are arranged on the extended of the substantially central part of the ink discharge portion 37, and on the rotation center side of the optical disc 2.

The printing surface of the optical disc 2 is the label surface 2a constituting one surface of the optical disc 2. If the label sheet 53 is attached to the label surface 2a of the optical disc 2, the surface 53a of the attached label sheet 53 becomes the printing surface. The head holder 41 combined with the print head 31 is supported in a relatively movable manner by the head slider 42.

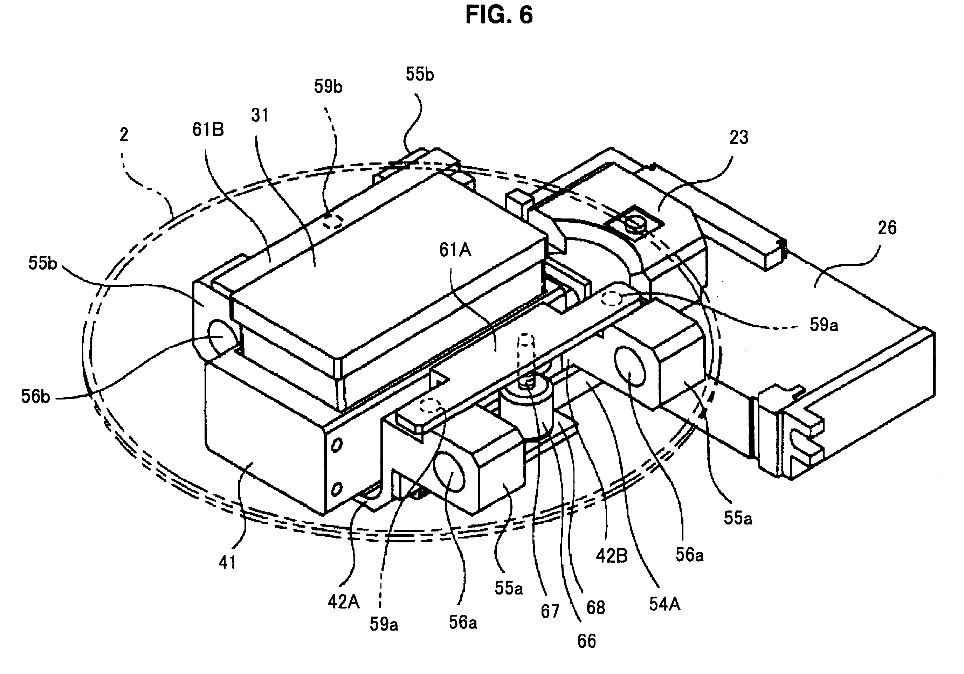

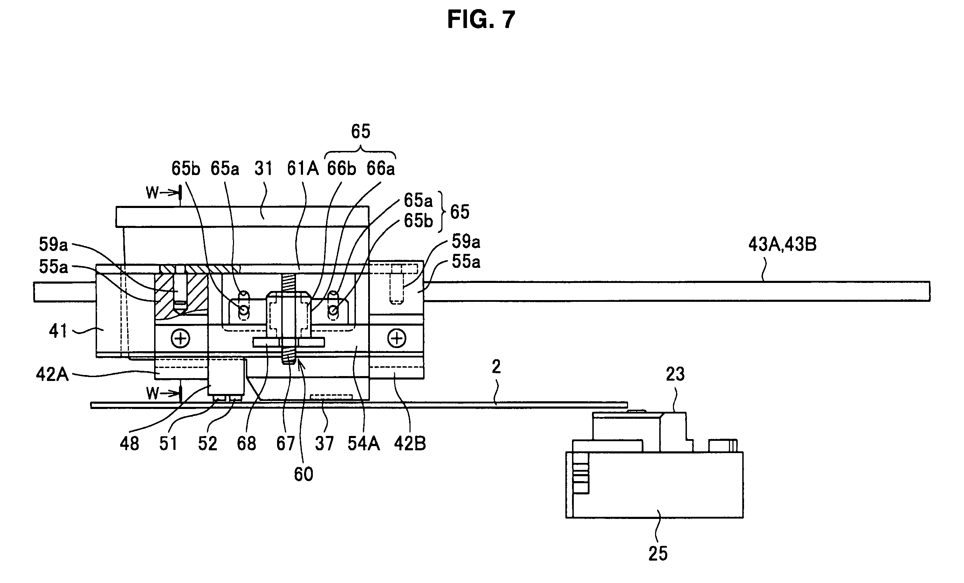

Fig. 6 is an explanatory view showing the head holder 41 and the head slider 42 for supporting the same. Fig. 7 is an explanatory view describing the positional relationship in the height direction of the print head 31, the optical disc 2, and the optical pickup 23. As shown in Fig. 6 and Fig. 7, the head slider 42 is arranged to face the optical disc 2 with a predetermined gap on the lower side. In this case, the optical disc 2 is attached to the turntable (not shown) of the disc rotation mechanism of the disc drive device 9 arranged on the opposite side of the chassis plate 17, and the optical pickup 23 can move closer or move away in the direction perpendicular to the plane direction which is the main surface of the optical disc 2 with respect to the turntable.

The head slider 42 is configured by a front side member 42A and a back side member 42B arranged with a predetermined spacing in the front and back direction which is the longitudinal direction of the print head 31, and left and right coupling members 54A, 54B, arranged with a predetermined spacing in the left and right direction, for coupling the front side member 42A and the back side member 42B. The front side member 42A and the back side member 42B are raised to the upper side with a predetermined spacing in the left and right direction intersecting the longitudinal direction. A first bearing portion 55a, 55a projecting to the side is arranged at the distal end on one raised side, and a second bearing portion 55b, 55b projecting to the side on the opposite side is arranged at the distal end on the other raised side.

The first bearing portion 55a, 55a includes a first bearing hole 56a, 56a, where the two first bearing holes 56a, 56a are set on the same axis center line. Similarly, the second bearing portion 55b, 55b includes a second bearing hole 56b, 56b, where the two second bearing holes 56b, 56b are set on the same axis center line. The first bearing hole 56a and the second bearing hole 56b are respectively attached with a bearing member 58, and fixed through a fixing means such as press-fit. The two guide shafts 43A, 43B are slidably inserted to the bearing members 58.

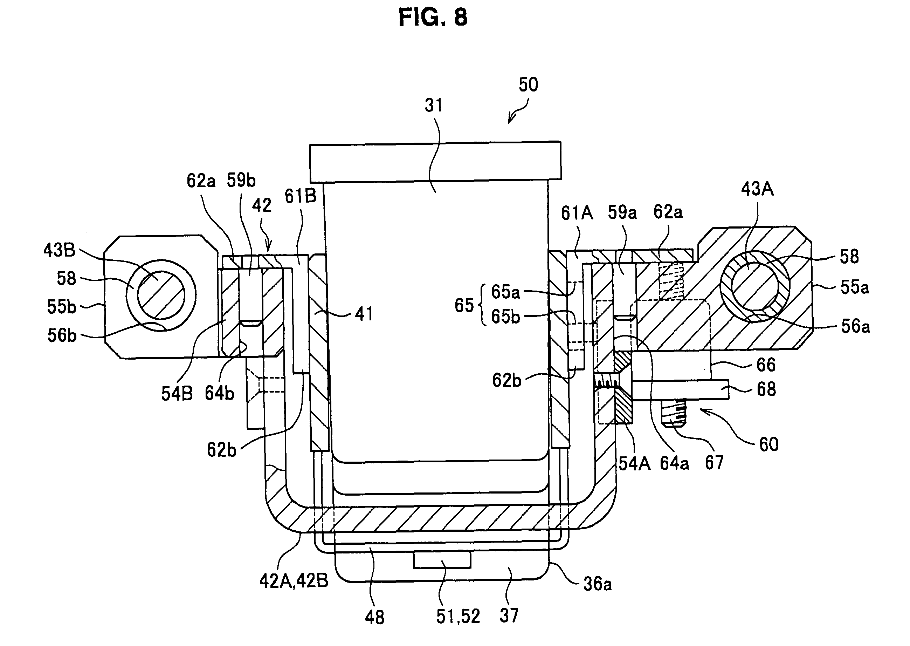

Fig. 8 is an explanatory view describing a state in which the print head 31 is held by the head holder 41, and a state in which the head holder 41 is supported in a relatively movable manner with respect to the head slider 42 by way of three guide pins 59a, 59b. A first supporting plate 61A is attached to one long side of the head holder 41, and a second supporting plate 61B is attached to the other long side. The two supporting plates 61A, 61B respectively include an upper surface portion 62a and a side surface portion 62b, and are formed as a member having an L-shaped cross-sectional shape by continuing the ends of the both surface portions.

The two supporting plates 61 A, 6 1 B are integrally configured with the head holder 41 by fixing the respective side surface portion 62b to the long side of the head holder 41. The upper surface portion 62a of the first supporting plate 61A thereby faces the upper side of the first baring portions 55a, 55a arranged with a predetermined spacing in the front and back direction at one side in the width direction of the print head 31. The upper surface portion 62a of the second supporting plate 61B faces the upper side of the second baring portions 55b, 55b arranged with a predetermined spacing in the front and back direction at the other side in the width direction of the print head 31.

A guide pin 59a, 59a extending to the lower side or the direction substantially parallel with the side surface portion 62b is arranged at both ends in the longitudinal direction of the upper surface portion 62a of the first supporting plate 61A. Two guide pins 59a, 59a are slidably inserted to the guide holes 64a, 64a formed to open at the upper surfaces of the two bearing portions 55a, 55a. One guide pin 59b extending to the lower side which is the direction substantially parallel with the side surface portion 62b is arranged at an intermediate part in the longitudinal direction of the upper surface portion 62a of the second supporting plate 61B. The guide pins 59a is slidably inserted to the guide hole 64b formed to open at the upper surfaces of the coupling member 54B. The guide pins 59a, 59a, 59b and the guide holes 64a, 64a, 64b configure a first guide mechanism that functions to regulate the movement of the head holder 41 and to substantially parallel move the head holder 41 with respect to the head slider 42.

Furthermore, a second guide mechanism 65 including two long holes 65a, 65a and two projections 65b, 65b slidably engaged to the long holes 65a is arranged in the present embodiment to enhance the operation function of the parallel movement of the head holder 41 with respect to the head slider 42. The two long holes 65a, 65a are arranged with a predetermined spacing in the lateral direction and are formed to extend in the up and down direction at the side surface portion 62b of the first supporting plate 61A. In correspondence thereto, the two projections 65b, 65b are arranged to project out to the inner side with a predetermined spacing at the inner surface of the first coupling member 54A.

Two types of guide mechanisms are provided for moving the head holder 41 substantially parallel to the head slider 42 because the electric motor or the power source for operating the head holder 41 is to be arranged on one side in the horizontal direction of the print head 31. In other words, an adjustment motor 66 including a stepping motor or the like for relatively moving the head holder 41 with respect to the head slider 42 is arranged on one side in the width direction of the head holder 41.

Adjustment motor 66 includes a fixing portion 66a to be fixed to the head slider 42 side, a rotating portion 66b with a feed nut rotatably held at the fixing portion 66a, and a screw shaft 67 that passes through the rotating portion 66b. The fixing portion 66a of the adjustment motor 66 is mounted on a shelf plate 68 arranged in the first coupling member 54A and is integrally fixed thereto. The screw shaft 67 is attached to the head holder 41 by fixing one end to the lower surface of the first supporting plate 61A. The screw shaft 67 passes through the center part of the adjustment motor 66 in the up and down direction, and projects out to the lower side of the shelf plate 68.

The adjustment motor 66 and the screw shaft 67 configure a distance adjustment unit 60 for adjusting the distance S by moving the print head 31 so as to move closer or move away with respect to the print surface. When the adjustment motor 66 is driven, the screw shaft 67 moves in the axis direction according to the rotating direction by the rotation of the feed nut based on the rotation of the rotating portion 66b. According to such movement of the screw shaft 67, the print head 31 relatively moves in a direction perpendicular to the moving direction (front and back direction) of the head slider 42 (direction perpendicular to the main surface of the optical disc 2) with the head holder 41 fixed through the first supporting plate 61A.

The adjustment motor 66 is arranged on one side of the print head 31, and the shaft center line of the screw shaft 67 is at the position distant from the center part of the print head 31. Thus, a rotation moment generates at the print head 31 by the moving force of the screw shaft 67 movable in the shaft center line direction, and a partial force in the direction orthogonal to the perpendicular direction acts on the print head 31. The partial force in the orthogonal direction acts as a resistance force that inhibits the smooth movement in the perpendicular direction of the print head 31.

In the present embodiment, on the other hand, two supporting plates 61A, 61B are fixed to the head holder41, and the guide pins 59a, 59b are arranged at each supporting plate 61A, 61B, which guide pins 59a, 59b slidably engage the guide holes 64a, 64a formed in the front side member 42A and the back side member 42B of the head slider 42 and the guide hole 64b formed in the second supporting plate 61B. Furthermore, the three guide pins 59a, 59a, 59b are arranged at satisfactory balance to form a triangle, and hence the three guide pins 59a, 59a, 59b can be slidably moved in a similar state. As a result, the head holder 41 can be smoothly parallel moved in the perpendicular direction while maintaining a substantially horizontal state.

Moreover, two long holes 65a, 65a are formed at the side surface portion 62b of the first supporting plate 61A, and two projections 65b, 65b slidably engaging the long holes are arranged in the first coupling member 54A. Thus, the horizontal state of the head holder 41 can be maintained at higher accuracy, and the head holder 41 can be reliably and smoothly moved in the perpendicular direction.

The print head 31 including the distance adjustment unit 60 having such configuration is movably supported by two head guide shafts 43A, 43B. As shown in Fig. 5, the first head guide shaft 43A is inserted in a freely slidable manner to each bearing member 58 of the two bearing holes 56a, 56a of the first bearing portion 55a, 55a arranged on one side of the head slider 42. The second guide shaft 43B is inserted in a freely slidable manner to each bearing member 58 of the two bearing holes 56b, 56b of the second bearing portion 55b, 55b arranged on the other side of the head slider 42.

The two guide shafts 43A, 43B are extended in the longitudinal direction of the open hole 18 formed in the chassis plate 17 and are arranged parallel to each other while maintaining a predetermined spacing. The two guide shafts 43A, 43B are fixed and supported at both ends by two guide bearings 44A, 44B. The two guide bearings 44A, 44B are arranged at both ends in the longitudinal direction of the open hole 18, and are respectively fixed to the chassis plate 17 by a fixing screw.

A feed screw shaft 45 is arranged with a predetermined spacing on the outer side of one guide shaft 43B. The feed screw shaft 45 is set parallel to the two guide shafts 43A, 43B, and is coupled to a rotation shaft of the head feed motor 47 by a joint 71 attached to one end in the axial direction thereof. The head feed motor 47 is fixed to the motor bracket 72, which motor bracket 72 is fixed to the chassis plate 17 by a fixing means such as a fixing screw. The feed nut 46 is screw-fitted to the feed screw shaft 45, and a nut attachment plate 73 is fixed to the feed nut 46. The nut attachment plate 73 is fixed to the head slider 42 by the fixing screw.

When the head feed motor 47 is driven, the rotational force of the rotation shaft thereof is transmitted to the feed screw shaft 45 by way of the joint 71, and also transmitted to the feed nut 46. In this case, the feed nut 46 does not rotate as it is fixed to the head slider 42 by way of the nut attachment plate 73, but the head slider 42 is guided by the two head guide shafts 43A, 43B to be movable in the axial direction thereof. Thus, the feed nut 46 selectively moves in a direction of moving closer to the head feed motor 47 or in a direction of moving away from the head feed motor 47 in accordance with the rotating direction of the feed screw shaft 45. Thus, the head slider 42 integrally moves with the feed nut 46, and consequently, the print head 31 moves in the front and back direction, which is the same direction as the axial direction of the feed screw shaft 45.

The movement of the print head 31 in the front and back direction can be detected by two position detection sensors 74, 75. The first position detection sensor 74 detects the disc inner stop position when the ink discharge portion 37 of the print head 31 moves towards the inner side in the radial direction of the optical disc 2 and the portion closest to the center part passes by a predetermined distance. The second position detection sensor 75 detects the disc outer stop position farthest from the center part when the ink discharge portion 37 of the print head 31 moves towards the outer side in the radial direction of the optical disc 2.

A position detection piece 76 is attached to the nut attachment plate 73 to detect such positions. The disc inner stop position is detected by detecting the position detection piece 76 with the first position detection sensor 74, and the print head 31 is stopped at the relevant position. Similarly, the disc outer stop position is detected by detecting the position detection piece 76 with the second position detection sensor 75, and the print head 31 is stopped at the relevant position.

Fig. 3 shows a state in which the printing device 10 is accommodated in the housing 3 with the chassis plate 17 removed and superimposed with the disc tray 12 or the like. In such optical disc device 1, the head center line Lb passing the ink discharge portion 37 at substantially the center of the print head 31 of the printing device 10 is set at a position deviated by a distance E from the main body center line La passing the center of rotation Oc of the disc attachment unit (turntable 20) which is the center part of the disc drive device 9. Thus, the print head 31 moves on the trajectory of the head center line Lb deviated by the distance E from the center which is rotation Oc and executes the printing process with respect to the printing surface of the optical disc 2.

A head cap 77 to be attached to the ink discharge portion 37 of the print head 31 and an ink reservoir 78 are arranged at the far side of the housing 3 on the head center line Lb. The head cap 77 prevents drying of the nozzle of the ink discharge portion 37, and prevents the ink from getting dry and clogging the nozzle. The ink reservoir 78 prevents the air from entering the nozzle of the ink discharge portion 37 and the print error, in which ink is not dischargeable, from occurring.

The flow of signals in the optical disc device 1 according to the present embodiment will be described with reference to Fig. 10. Fig. 10 is a block diagram showing a flow of signals in the optical disc device 1.

As shown in Fig. 10, the control device 80 of the optical disc device 1 includes a central control unit 81, an interface unit 82, a drive control unit 83, a tray drive circuit 84, a recording control circuit 85, a signal processing unit 86, a print image generation unit 87, a print control unit 88, a distance sensor drive circuit 90, a print mechanism drive circuit 91, an ink discharge drive circuit 92, an ink remaining amount detection circuit 93, a high voltage power supply unit 96, a ground side electrode 97, a high voltage side electrode 98, and the like.

The central control unit 81 is the portion that controls the drive control unit 83, the print image generation unit 87, and the print control unit 88. The central control unit 81 outputs a recording data signal provided from the interface unit 82 to the drive control unit 83. The central control unit 81 also outputs an image data signal provided from the interface unit 82 and a position data signal provided from the drive control unit 83 to the print image generation unit 87 and the print control unit 88.

The interface unit 82 is the connecting portion that electrically connects an external device such as a personal computer and a DVD recorder and the optical disc device 1. The interface unit 82 outputs a signal provided from the external device to the central control unit 81. The signal to be provided to the central control unit 81 is the signal corresponding to the external storage information stored in the external device, and can include the recording data signal corresponding to the recording information to be recorded in the information recording unit of the optical disc 2, the image data signal corresponding to the visible information to print on the printing surface of the optical disc 2 (surface of the optical disc 2 or the surface of the label sheet), and the like. Furthermore, the interface unit 82 outputs a reproduction data signal read out from the information recording unit of the optical disc 2 to the external device by the optical disc device 1. A specification example of the electrical connection with the external device can include ATA standard (AT Attachment), Serial ATA standard (SATAT), SCSI standard (Small Computer System Interface), USB standard (Universal Serial Bus), and the like.

The drive control unit 83 controls the rotation of the spindle motor 21 of the disc rotation mechanism, and controls the operation of the tray drive circuit 84 and the recording control circuit 85. In other words, the drive control unit 83 outputs a control signal based on the control signal provided from the central control unit 81, and drives the spindle motor 21. The optical disc 2 attached to the turntable 20 of the spindle motor 21 is thereby rotatably driven at a constant linear velocity. Furthermore, the drive control unit 83 outputs the control signal to control the operation of the tray drive circuit 84 and the recording control circuit 85. The drive control unit 83 outputs the position data signal provided from the signal processing unit 86 to the central control unit 81.

The tray drive circuit 84 controls the rotation of the drive motor (not shown) of the tray conveyance mechanism. The drive motor for the tray is driven based on the control signal output from the tray drive circuit 84. The disc tray 12 is thereby conveyed between the disc attachment position inside the housing 3 and the disc retrieval position outside the housing 3. The recording control circuit 85 controls the recording of the recording data signal and the reproduction of the reproduction data signal by the optical pickup 23.

The optical pickup 23 includes a laser light source 23a and a light receiving element 23b, where the light beam emitted from the laser light source 23 and irradiated from the objective lens is reflected by the information recording unit of the optical disc 2 and received by the light receiving element 23b. The recording control circuit 85 outputs to the optical pickup 23 the control signal for causing the track formed in the information recording unit to follow the light beam and execute the track servo and the focus servo. The drive motor for the pickup is driven based on the control signal provided from the recording control circuit 85. The optical pickup 23 thereby moves in the radial direction of the optical disc 2 integrally with the slide member.

The signal processing unit 86 performs demodulation and error detection of the RF (Radio Frequency) signal provided from the optical pickup 23, and generates the reproduction data signal. The signal processing unit 86 detects the position data signal as a signal having a specific pattern such as a synchronization signal and a signal representing the position data of the optical disc 2 based on the RF signal. The position data signal can include a rotation angle signal indicating the rotation angle of the optical disc 2, a rotating position signal indicating the rotating position of the optical disc 2, and the like. The reproduction data signal and the position data signal are output to the drive control unit 83.

The print image generation unit 87 generates a print image based on the control signal provided from the central control unit 81. The print control unit 88 performs the control of the print head 31 of the printing device 10, the head drive mechanism for operating the print head 31, the distance detection unit for detecting a distance between the print head and the printing surface, the cleaning mechanism for cleaning the print head 31 and the distance detection unit, and the like based on the control signal provided from the central control unit 81.

The print control unit 88 generates the ink discharge data based on the image data obtained by the image data signal generated by the print image generation unit 87 and provided from the central control unit 81. The print control unit 88 generates the control signal for controlling the printing device 10 based on the generated ink discharge data and the position data signal provided from the central control unit 81, and outputs the control signal to the print mechanism drive circuit 91 and the ink discharge drive circuit 92. The desired visible information is printed on the printing surface of the optical disc 2 through the control of the print head 31 according to the control of the print mechanism drive circuit 91 and the ink discharge drive circuit 92 by the print control unit 88.

The print mechanism drive circuit 91 drives the head feed motor 47, the head cap 77, the suction pump 94, and the blade 95 based on the control signal provided from the print control unit 88. In this case, the print head 31 moves from the inner side towards the outer side in the radial direction of the optical disc 2 when the head feed motor 47 is driven. The movement direction of the print head 31 may be from the outer side towards the inner side in the radial direction of the optical disc 2, opposite to the case of the present embodiment.

The ink discharge drive circuit 92 drives the print head 31 based on the control signal provided from the print control unit 88. The ink droplets are thereby discharged from each discharge nozzle at the ink discharge portion 37 of the print head 31 and the ink droplets are attached to the printing surface of the rotatably driven optical disc 2. Three colors of C (cyan), Y (yellow), and M (magenta) are accommodated in the print head 31. The visible information including the image data expressed with tone values representing the brightness of each color of R (red), G (green), and B (blue) is displayed by the combination of such three types of ink.

Furthermore, the ink discharge drive circuit 92 detects the remaining amount of ink accommodated in the print head 31, and displays the magnitude of the remaining amount with the display means. The detection of the ink remaining amount is carried out for every ink used, but normally, a display that the ink remaining amount is few is made when the remaining amount of one of the inks reduces to smaller than or equal to a predetermined amount as the usage amount of ink differs depending on the printing conditions.

In such optical disc device 1, when the print head 31 is mounted in the device and the visible information is printed on the label surface while rotating the optical disc 2, the mist of the ink droplets discharged from the print head 31 scatters by the air current of when the optical disc 2 rotates and floats in the device without attaching to the label surface of the optical disc 2. The floating mist attaches to the optical pickup 23, the disc tray 12, and the like, and contaminates the interior of the device. When the optical pickup 23 is contaminated, readout of the data recorded on the optical disc 2 and the write of data to the optical disc 2 become difficult, which leads to degradation in the recording and reproducing performance.

Therefore, in the present embodiment, the high voltage power supply unit 96, the ground side electrode 97, and the high voltage side electrode 98 are arranged as shown in Fig. 10. The high voltage power supply unit 96 applies high voltage (e.g., voltage of a few kV) to between the ground side output and the high voltage side output of the high voltage power supply unit 96 based on the control signal from the print control unit 88. The ground side output of the high voltage power supply unit 96 is connected to the ground side electrode 97 of the print head 31, the tray main body 14, and the like. The high voltage side output of the high voltage power supply unit 96 is connected to the high voltage electrode 98 of the electrode plate 102, and the like. The control signal from the print control unit 88 can induce the mist while the ink droplets are being discharged from each discharge nozzle at the ink discharge portion 37 of the print head 31, that is, during the printing process in the inkjet method, and/or while the mist of the ink droplets is floating inside the drive.

The mist of the ink droplets are induced to a mist inducing unit, to be described later, by the potential difference of the high voltage and the electric field generated in a space inside the drive. The polarity of the potential difference of the high voltage may be positive or negative.

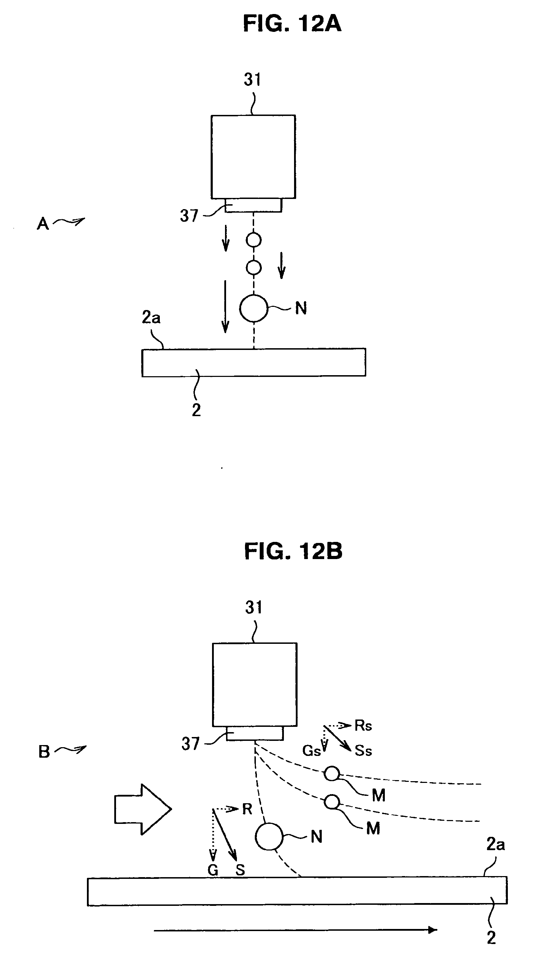

Generally, all ink droplets discharged from the print head 31 of the printing device 10 do not land on the printing surface of the optical disc 2, and the ink droplets that did not land become the mist and float inside the device thereby contaminating the interior mechanisms and equipments. As shown in Fig. 12A, when the ink droplet N is discharged from the ink discharge portion 37 of the print head 31 while the optical disc 2 is not rotating, the ink droplet N subjected to sufficient discharge speed drops substantially perpendicularly onto the label surface 2a of the optical disc 2 which is the printed medium and attaches to the label surface 2a.

Thus, if the relative movement of the print head 31 and the optical disc 2 which is the printed medium does not exist and the movement of the surrounding air is small, the generation of mist by the discharge of ink droplet N becomes small. However, the printing of the image by the ink head method is difficult if the relative movement of the print head 31 and the printed medium does not exist. Therefore, the relative movement of the print head 31 and the printed medium normally exists, and such relative movement causes the ink droplet N that did not land on the label surface 2a of the optical disc 2 to become the mist M and float inside the device.

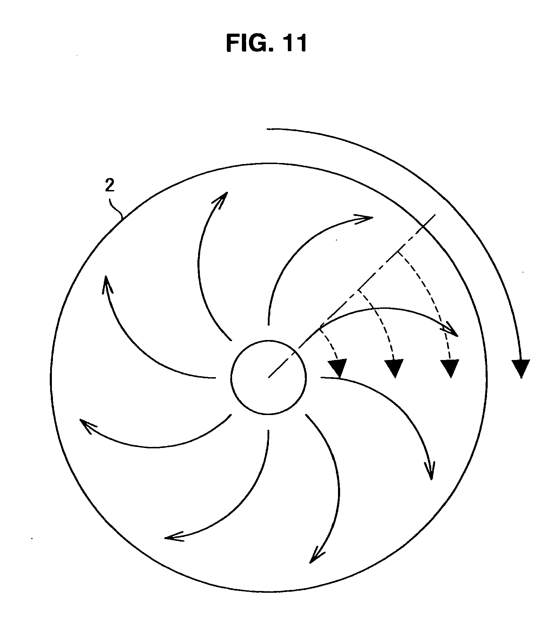

In the present embodiment, the so-called Rθ printing method of performing printing while the optical disc 2 is being rotatably driven by the spindle motor 21 of the disc rotation mechanism is used. As shown with arrows in Fig. 11, when the optical disc 2 rotates at a constant speed by the disc attachment unit, a steady flow of air from the center of the optical disc 2 towards the outer side in the radial direction generates along the rotation of the optical disc 2 at the periphery of the optical disc 2.

Thus, as shown in Fig. 12B, when the ink droplet N is discharged from the ink discharge portion 37 of the print head 31 in the air current generated when the optical disc 2 is rotatably driven, the ink droplet N subjected to sufficient discharge speed receives the inertial force G in the vertical direction caused by the speed the discharged ink droplet N scatters and the air resistance with respect to the scattering, and the force R in the horizontal direction received by the flow of rotating air of the optical disc 2. The synthetic force S in which the inertial force G and the horizontal force R are synthesized acts on the ink droplet N. Since the inertial force G is sufficiently greater than the horizontal force R, the ink droplet N slightly moves in the direction of the air flow from immediately below the ink discharge portion 37 and attaches to the label surface 2a of the optical disc 2.

Similarly, the ink droplet of slow discharge speed or the ink droplet (hereinafter also referred to as mist M) that greatly receives air resistance receive the inertial force Gs in the vertical direction caused by the speed the discharged mist M scatters and the air resistance with respect to the scattering, and the force Rs in the horizontal direction received by the flow of air. The synthetic force Ss in which the inertial force Gs and the horizontal force Rs are synthesized acts on the mist M. Since the inertial force Gs on the mist M is smaller than the inertial force G on the ink droplet N receiving sufficient discharge speed since the scattering speed in time of discharge is slow, and the air resistance with respect to the scattering is large compared to the mass as the size of the mist M is small.

As a result, the mist M flows with the air and floats in the housing 3 without attaching to the label surface 2a of the optical disc 2. Thus, the floating mist M thus may attach to the pickup lens or the like of the optical pickup 23 and contaminate the objective lens that performs read and write of information thereby causing failure of read and write to easily occur, and may attach to the electric circuit or the like causing operation failure.

### (Behavior of ink by application of high voltage)

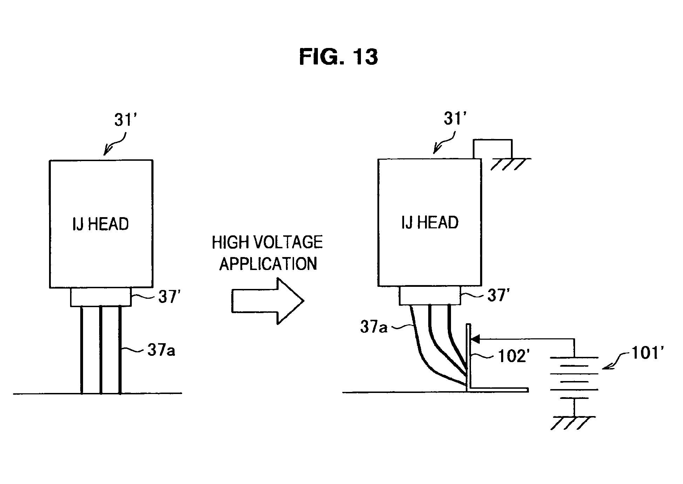

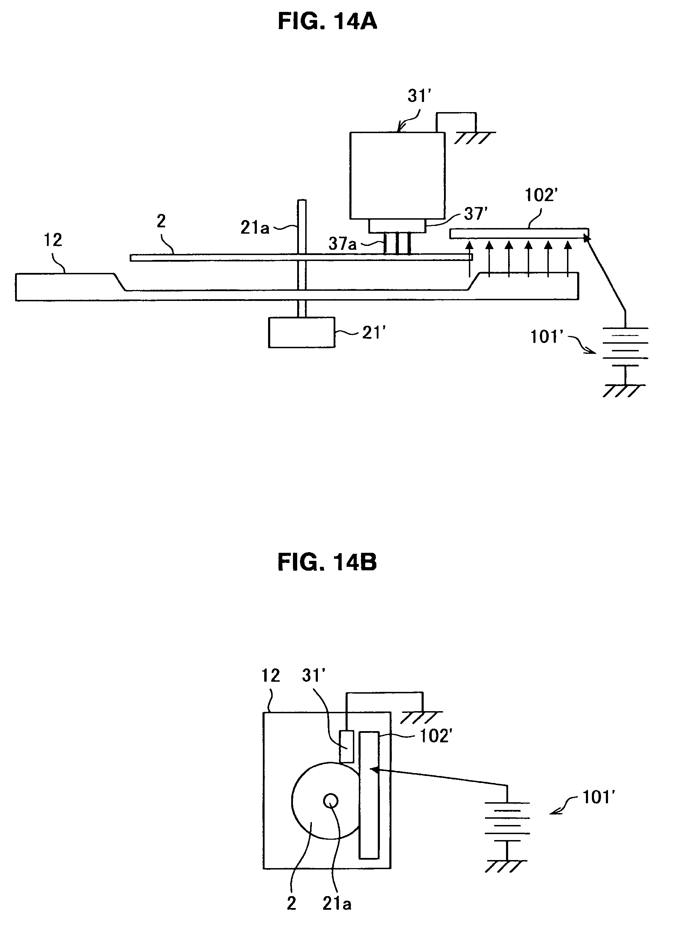

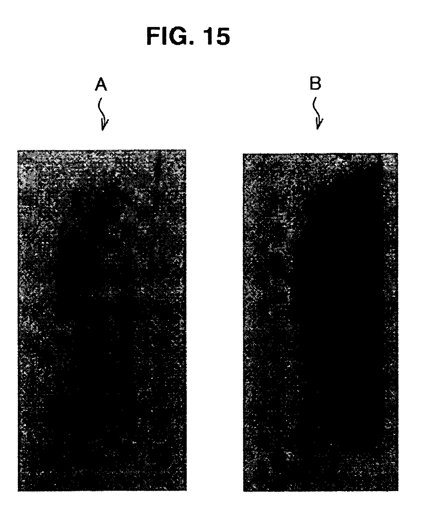

The inventors of the present invention focused on generating an electric field by applying high voltage to induce the mist M and absorb the mist to a predetermined position to prevent the floating mist M from contaminating the interior of the device, and reviewed the behavior of the ink by application of high voltage. The behavior of the ink by application of high voltage will be described below based on the knowledge obtained by the inventors of the invention as a result of the review with reference to Fig. 13 to Fig. 15. Fig. 13 is an explanatory view showing one example of the behavior of the ink by application of high voltage. Fig. 14A is a side view showing a configuration of an experiment device for checking the effect of preventing contamination in the drive by the scattering of the ink mist, Fig. 14B is a plan view showing a configuration of the experiment device for checking the effect of preventing contamination in the drive by the scattering of the ink mist, and Fig. 15 is a photograph showing the experimental result of the ink collecting experiment for checking the effect of preventing contamination in the drive by the scattering of the ink mist.

As shown in Fig. 13, the inkjet head 31' serving as one example of the print head is formed through the semiconductor process. Thermal method, electrostatic discharge method, and piezo method are known as various types of ink discharge method including the example of the inkjet head 31'.

The thermal method is a method of discharging ink using heat energy, and is implemented by a device including an ink liquid chamber accommodating ink serving as a liquid, a heat generating resistor body serving as an energy generation element arranged in the ink liquid chamber, and a nozzle for discharging the ink as liquid droplet. In such device, the ink is rapidly heated with the heat generating resistor body, air bubbles are generated in the ink on the heat generating resistor body, and the liquid droplets of the ink are discharged from the nozzle by the energy in time of air bubble generation.

The electrostatic discharge method is implemented by a device including a vibration plate and two electrodes arranged on the lower side of the vibration plate by way of an air layer in place of the heat generating resistor body of the thermal method for the energy generation element. In such device, voltage is applied between the electrodes, the vibration plate is bent towards the lower side, and thereafter, the voltage is set to 0 V to release the electrostatic force. In this case, the vibration plate returns to the original state, and the liquid droplets of the ink are discharged using the elastic force thereof.

The piezo method is implemented by a device using a stacked body of a piezo element having an electrode on both surfaces and a vibration plate in place of the heat generating resistor body of the thermal method for the energy generation element. In such device, when voltage is applied to the electrodes on both surfaces of the piezo element, the bend moment occurs in the vibration plate by the piezoelectric effect, and consequently, the vibration plate deflects and deforms. Therefore, the liquid droplets of the ink can be discharged using such deformation.

The inkjet head 31' discharges the ink 37a from the ink discharge portion 37' using one of the methods of the thermal method, the electrostatic discharge method, or the piezo method, where the potential of the ink discharge portion 37' is desirably substantially the ground potential. The inventors of the present invention first arranged an electrode 102' near the ink discharge portion 37', as shown in Fig. 13, and checked the behavior of the ink 37a when high voltage of a few kV (e.g., 2 kV) is applied to the electrode 102' by the power supply 101'. As a result, the ink 37a was found to be pulled from the ink discharge portion 37' side (low potential side) to the electrode 102' side (high potential side) applied with high voltage, as shown in the figure on the right side of Fig. 11. The positive and negative high voltage is applied to the electrode 102', and it was found that ink can be induced with either high voltage. From such result, the inventors of the present invention considered preventing contamination of the interior of the disc drive by inducing the ink mist scattered in the disc drive to the electrode or the like applied with high voltage and collecting the ink mist.

The inventors of the present invention conducted the experiment with the configuration shown in Fig. 14A and Fig. 14B to confirm the idea. The optical disc device used in the experiment includes a tray 12 on which the optical disc 2 is mounted, an inkjet head 31' for discharging ink towards the label surface of the optical disc 2 mounted on the tray 12, a spindle motor 21' for rotating the optical disc 2, an electrode 102' applied with high voltage, and a power supply 101' for applying high voltage to the electrode 102'.

The inkjet head 31' is arranged on the label surface side (surface on the upper side in Fig. 2A) on the side opposite to the recording surface of the optical disc 2, where the ink 37a is discharged from the ink discharge portion 37' towards the label surface of the optical disc 2 mounted on the tray 12. The inkjet head 31' is movable in a direction parallel to the radial direction of the optical disc 2, and prints on the label surface by discharging ink while moving from the outer circumferential side towards the inner circumferential side with respect to the rotating optical disc 2.

A spindle shaft 21a is coupled to one end of the spindle motor 21'. The spindle shaft 21a is arranged to pass through substantially the center part of the optical disc 2, and is provided to rotatably support the optical disc 2.

The electrode 102' is a substantially rectangular metal plate arranged on the label surface side of the optical disc 2 to cover the outer circumferential side of the optical disc 2. The longitudinal direction of the electrode 102' is a direction parallel to the movement direction of the inkjet head 31'. In the present experiment, the power supply 101' is connected only to the electrode 102', so that high voltage is applied only to the electrode 102'.

The inventors of the present invention conducted an experiment for checking the collecting effect of the ink mist by the electrode 102' for a case in which voltage (1 to 2 kV in the present experiment) is applied to the electrode 102' and for a case voltage is not applied using the optical disc device having the configuration described above. The result is shown in Fig. 15. The photograph of Fig. 15A is a photograph of the electrode 102' of when the voltage is not applied to the electrode 102', and the photograph of Fig. 15B is a photograph of the electrode 102' of when the voltage is applied to the electrode 102', where the portion darker than other portions is the portion where the ink is adsorbed.

As shown in Fig. 15, when the voltage is not applied to the electrode 102', the floating ink is merely naturally adsorbed to the electrode 102' and the ink is barely adsorbed. However, when the voltage is applied to the electrode 102', the ink floating in the disc drive is induced to the high potential side, that is, the electrode 102' side applied with the high voltage, and a great amount of ink attaches to the electrode 102'.

### (Regarding mist inducing unit according to first embodiment)

From the above experimental results, the inventors of the present invention obtained the knowledge that the attachment region of the mist can be arbitrarily controlled and that the contamination of the interior of the disc drive can be prevented by applying high voltage to the portion where the mist of the ink droplets is to be collected and having the portion where the mist is not to be attached at ground potential. The mist inducing unit according to the present embodiment contrived based on such knowledge will be described in detail below.

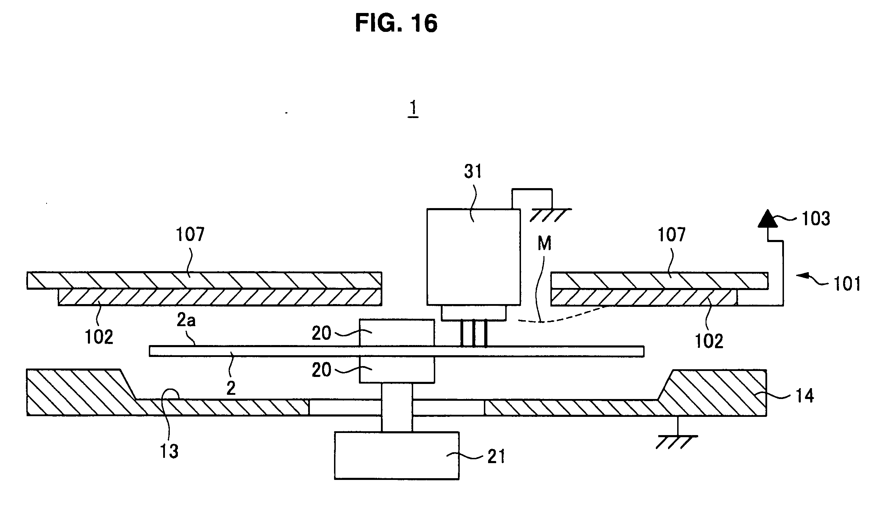

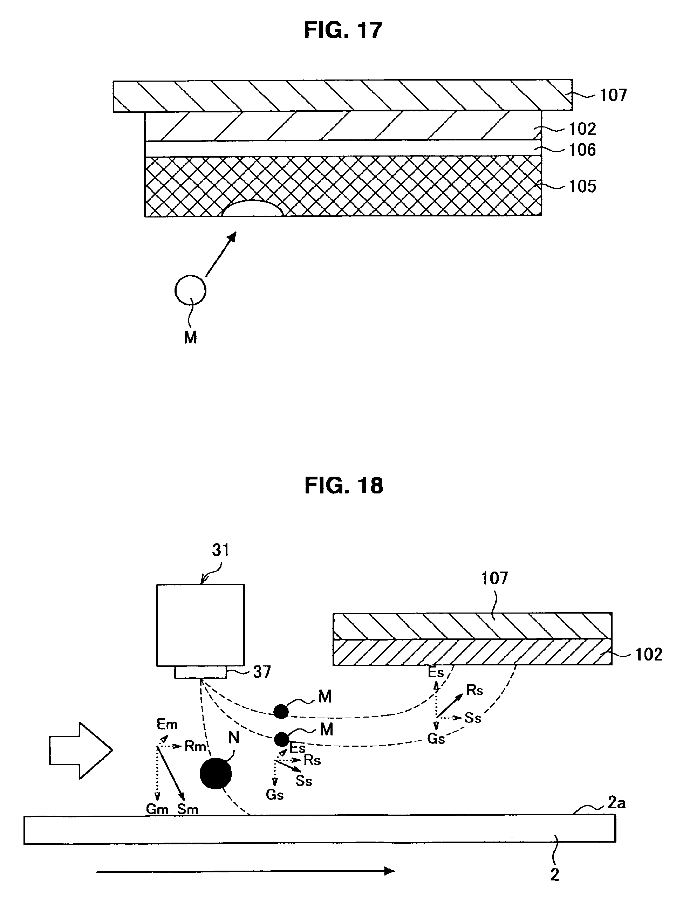

First, the configuration of the mist inducing unit 101 according to the present embodiment will be described with reference to Fig. 16 and Fig. 17. Fig. 16 is an explanatory view showing a configuration of the mist inducing unit 101 in the optical disc device 1 according to the present embodiment, and Fig. 17 is an explanatory view showing a detailed configuration of an electrode plate 102 according to the present embodiment.

As shown in Fig. 16, the mist inducing unit 101 is arranged inside the housing 3 in the present embodiment to adsorb the mist M discharged from the ink discharge portion 37 and floating in the device and prevent occurrence of drawbacks. The mist inducing unit 101 generates an electric field in the space where the optical disc 2 is accommodated by applying a predetermined voltage, and induces and adsorbs the mist M by electrostatic force. The mist inducing unit 101 includes two electrode plates 102, and a high voltage power supply unit 103 for applying a predetermined voltage to the two electrode plates 102 (correspond to high voltage power supply unit 96 and high voltage electrode 98 in Fig. 10).

The two electrode plates 102 are arranged to face the label surface 2a of the optical disc 2 with the print head 31 in between. The two electrode plates 102 are respectively supported by the top plate 107, and attached on the inner side of the upper surface portion 5a of the upper surface plate 5 configuring the housing 3. The print head 31 and the tray main body 14 are connected with the ground side output of the high voltage power supply unit 96 and the ground side electrode 97, and are grounded (earth, 0 V).

As shown in Fig. 17, the electrode plate 102 has a substantially flat plate shape, and is fixed to a substantially flat plate shaped top plate 107 by a fixing method such as an adhesive. The material of the electrode plate 102 is a conductive material that conducts high voltage, and may be metal such as copper, iron, aluminum, gold, and silver, or conductive resin. A mist adsorbing unit 105 for adsorbing the mist M is arranged on the surface facing the optical disc 2 of the electrode plate 102. A non-transmissive unit 106 is interposed between the electrode plate 102 and the mist adsorbing unit 105. A three layer structure of the electrode plate 102, the mist adsorbing unit 105, and the non-transmissive unit 106 is thereby obtained.

The mist adsorbing unit 105 has a substantially flat plate shape, and is arranged on the surface side facing the optical disc 2 of the electrode plate 102 by way of the non-transmissive unit 106. The material of the mist adsorbing unit 105 includes a porous material such as sea sponge and sponge, or fibrous material such as non-woven cloth and paper. The dye and the pigment contained in the adsorbed mist M are less likely to drop from the electrode plate 102 as the mist adsorbing unit 105 is made from a porous or a fibrous material. As a result, the label surface 2a of the optical disc 2 can be prevented from being contaminated, and dirt can be prevented from attaching to the skin and the clothing of the user by the adsorbed mist M. Furthermore, in addition to the mist M, dust, dirt and the like can also be adsorbed by the surface property and the surface structure of the mist adsorbing unit 105, and the effect of electric field, whereby the cleanliness of the interior of the housing 3 can be enhanced.

The non-transmissive unit 106 has a film-shape, and is attached to cover one entire surface of the electrode plate 102 and interposed between the electrode plate 102 and the mist adsorbing unit 105. The material of the non-transmissive unit 105 is a material that does not transmit moisture of the mist, and includes a film made of polymer resin such as PE (polyethylene), PET (polyethylene terephtalate), and PP (polypropylene). Thus, the moisture of the scattered mist M can be inhibited from moving to the electrode plate 102 by covering the electrode plate 102 with the non-transmissive unit 106. As a result, the mist M can be prevented from attaching to the electrode plate 102 and causing short circuit, discharge, and electrification. Furthermore, the current that flows by contact can be reduced even when foreign substances enter inside the housing 3 or when the user touches the electrode plate 101, and hence short circuit, discharge, and electrification can be prevented.

The mist adsorbing operation of the mist inducing unit 101 having such configuration will now be described with reference to Fig. 18. Fig. 18 is an explanatory view showing a flow of ink droplets in the optical disc device 1 according to the present embodiment.

First, when the optical disc 2 is rotatably driven by the spindle motor 21, a flow of air of a constant flow rate (flow in the direction shown with a thick arrow in the example of Fig. 7B) is generated at the periphery of the optical disc 2. The print head 31 and the tray main body 14 are connected to the earth so that the potential is set to 0 V. When the voltage (e.g., -2 kV) is applied to the electrode plate 102 under such environment, an electric field is generated in the space where the optical disc 2 is accommodated. The polarity of the voltage to apply to the electrode plate 102 may be positive or negative.

The ink droplet N is discharged from the print head 31 towards the label surface 2a of the optical disc 2 in such state. As shown in Fig. 18, the ink droplet (so-called main droplet) N subjected to sufficient discharge speed from the print head 31 is slightly subjected to an attraction force Em by the electric field generated by the application of voltage to the electrode plate 102. The ink droplet N is also subjected to the force Rm in the horizontal direction that acts from the flow of air caused by the rotation of the optical disc 2. The synthetic force Sm in which the inertial force Gm, the force Rm by the flow of air, and the attraction force Em by the electric field are synthesized balances and acts on the scattering trajectory of the ink droplet N. In this case, the ink droplet N is not greatly different from when the electric field is not generated since the scattering speed by discharge and the inertial force Gm by air resistance are large, and attaches to the label surface 2a of the optical disc 2 without being adsorbed to the electrode plate 102.

As a result of applying the voltage, the mist M of the ink droplet having slow discharge speed and the ink droplet (so-called satellite droplet) that is greatly subjected to air resistance floats on the flow of air as it has small scattering speed by discharge and inertial force Gs by air resistance, and is greatly influenced by the horizontal force Rs received from the flow of air. As the mist M approaches the electrode plate 102, the mist M is subjected to the attraction force Es (electrostatic force) by the electric field generated by application of the voltage to the electrode plate 102. The mist thus has the synthetic force Ss in which the inertial force Gs, the force Rs by the flow of air, and the attraction force Es by the electric field are synthesized balanced. However, the speed vector in the up and down direction of the mist M lowers due to the small inertial force Gs and the attraction force Es by the electric field.

The mist M continues to scatter, but the initial inertial force Gs obtained by discharge gradually becomes small, and becomes close to the trajectory as if flowed by the flow of air caused by the rotation of the optical disc 2. In this case, the attraction force Es (electrostatic force) by the electric field generated by the application of voltage to the electrode plate 102 continues to act on the mist M. As a result, the trajectory of the mist M that scattered from the print head 31 in the direction of the label surface 2a of the optical disc 2 (downward direction in Fig. 18) by discharge gradually changes the trajectory to the upward direction where the electrode plate 102 is arranged.

When the mist M further continues to scatter, the mist M is further subjected to the attraction force Es generated by the electric field vector of the space on the scattering trajectory while riding on the flow of air caused by the rotation of the optical disc 2 and along the inclination of the equipotential surface. The mist M is then adsorbed to the electrode plate 102 (or mist adsorbing unit 105 attached to the electrode plate 102).

In view of the adsorbing operation of the mist M described above, the electrode plate 102 is preferably arranged on the upper side than the ink discharge portion 37 in the optical disc device 1 according to the present embodiment. If the electrode plate 102 is arranged on the lower side than the ink discharge portion 37, the mist M of the ink droplets discharged from the ink discharge portion 37 may float to the upper side of the electrode plate 102, and may contaminate the interior of the disc drive without being adsorbed to the electrode plate 102 (or mist adsorbing unit 105 attached to the electrode plate 102).

According to the optical disc device 1 of the present embodiment as described above, the mist M that did not attach to the label surface 2a of the optical disc 2 which is the printed medium can be induced to the electrode plate 102 of the mist inducing unit 101 and the mist M can be efficiently adsorbed by the synergic effect of the flow of air in a constant direction generated when rotatably driving the optical disc 2 and the electric field generated by the mist inducing unit 101. The peripheral device can be thus prevented or suppressed from being contaminated by the mist M.

In other words, the mist M can be efficiently adsorbed by the physical cooperative action and the synergic effect of the steady flow of air generated when the optical disc 2 rotates at a constant speed described using Fig. 11, the scattering process of the ink droplet N from the ink discharge portion 37 of the print head 31 and the generation process and the scattering process of the mist M in the air current described using Fig. 12B, and the scattering process of the ink droplet N and the scattering process of the mist M while the electric field is applied to the space described using Fig. 18.

### (Regarding arrangement area of electrode plate)

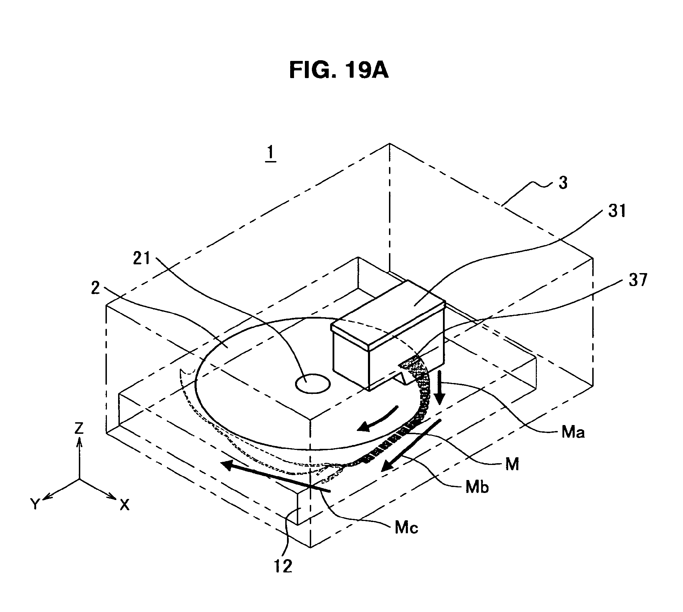

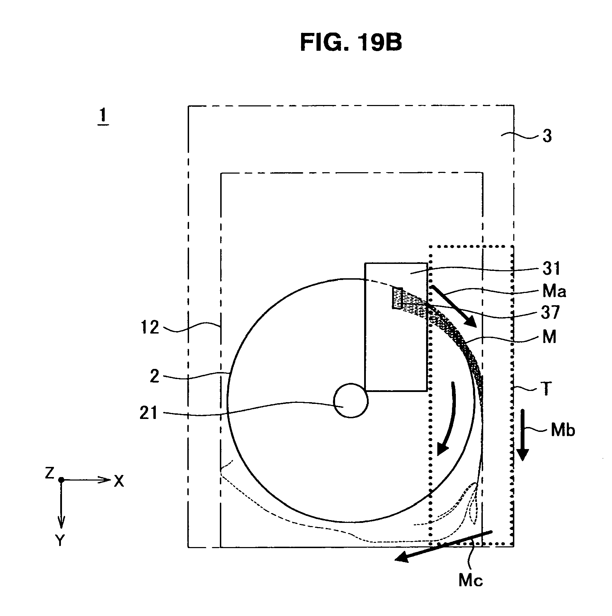

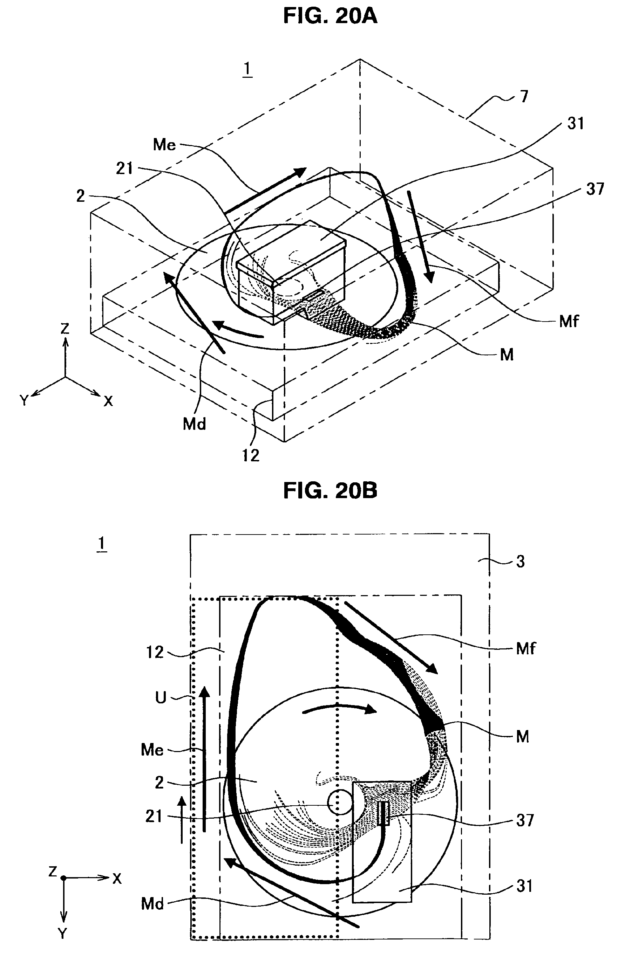

The electrode plate 102 is preferably arranged in the area where the floating amount (concentration) of the mist M is the highest to more efficiently adsorb the mist. The suitable arrangement area of the electrode plate 102 will be described below with reference to Figs. 19A, 19B, 20A, and 20B. Figs. 19A and 19B are respectively a perspective view and a plan view showing a state of the flow of mist M when printing the outer circumferential side of the optical disc 2 in the optical disc device 1 according to the present embodiment. Figs. 20A and 20B are respectively a perspective view and a plan view showing a state of the flow of mist M when printing the inner circumferential side of the optical disc 2 in the optical disc device 1 according to the present embodiment. In Fig. 19A to Fig. 20B, the optical disc 2 is assumed to rotate in the clockwise direction.

As shown in Fig. 19A and Fig. 19B, the mist M of the ink droplet N discharged from the print head 31 floats in the housing 3 by the flow of air generated when the optical disc 2 is rotatably driven when printing the outer circumferential side of the optical disc 2 by the print head 31. More specifically, the mist M of the ink droplet N discharged from the ink discharge portion 37 of the print head 31 rides on the flow of air by rotation above the label surface 2a of the optical disc 2 with the ink discharge portion 37 of the print head 31 as a generation source, and scatters towards the downstream side in the rotating direction of the optical disc 2, that is, towards the side wall of the print head 31 side of the housing 3 from the outer circumference of the optical disc 2 in the arrangement of the present embodiment (arrow Ma in Fig. 19A, Fig. 19B).

The mist M then reaches the side of the outermost circumference of the optical disc 2 and then reaches the region where the optical disc 2 does not exist outside the outermost circumference, and the air current including the mist M collides to the side wall of the housing 3 (arrow Mb in Fig. 19A, Fig. 19B). When colliding to the side wall of the housing 3, the mist M rides on the flow of air generated at the side of the optical disc 2 and the structure of the housing 3 at the periphery when the optical disc 2 is rotatably driven, and scatters throughout the entire housing 3. In this case, the air current including the mist M reaches the region where the optical disc 2 does not exist outside the outermost circumference and collides to the side wall of the housing 3, and thereafter, the mist M diffuses not only above the label surface 2a of the optical disc 2 but also the surface on the opposite side of the label surface 2a of the optical disc 2, that is, throughout the entire housing 3 by riding on the flow of air passing under the information recording surface (arrow Mc in Fig. 19A, Fig. 19B).

As shown in Fig. 19B, the floating amount (concentration) of the mist M is the highest in the region T surrounded with a dotted line on the downstream side in the rotating direction of the optical disc 2 with the ink discharge portion 37 as a reference. Thus, it is effective to adsorb the mist M at the area where the floating amount (concentration) of the mist M is the highest. In particular, the concentration is high above the label surface 2a of the optical disc 2 before the mist M reaches the side of the outermost circumference of the optical disc 2. After the mist M reaches the side of the outermost circumference of the optical disc 2, the concentration is high in both spaces of the label surface 2a side of the optical disc 2 and the information recording surface side at the side of the optical disc 2 and the space of the housing 3 at the periphery thereof.

Therefore, when printing the outer circumferential side of the optical disc 2, the electrode plate 102 is preferably arranged in the region T (downstream side in the rotating direction of the optical disc 2 with respect to the ink discharge portion 37) where the floating amount (concentration) of the mist M is the highest. Thus, the mist M can be efficiently adsorbed, and the effect of preventing contamination of the interior of the housing 3 by the mist inducing unit 101 can be enhanced.

As shown in Fig. 20A and Fig. 20B, when printing the inner circumferential side of the optical disc 2 by the print head 31, the mist M of the ink droplet N discharged from the print head 31 floats in the housing 3 by the flow of air generated when the optical disc 2 is rotatably driven. More specifically, the air flowing around the optical disc 2 flows from the center of the optical disc 2 towards the outer side in the radial direction along the rotating direction of the optical disc 2, as shown in Fig. 11. Thus, the mist M of the ink droplet N discharged from the print head 31 floats as if drawing an arc from the center of the optical disc 2 towards the outer side (outer circumference) in the radial direction while rotating along the rotating direction of the optical disc 2 (arrow Md in Figs. 20A, 20B). When the mist M reaches the side of the outermost circumference of the optical disc 2, separates from the outer circumference of the optical disc 2, and reaches the region where the optical disc 2 does not exist, the mist M floats along the side wall of the housing 3 (arrow Me in Figs. 20A, 20B). The mist M then rides on the flow of air flowing inside the housing 3, and diffuses while circling inside the housing 3.

In the arrangement inside the housing 3 of the present embodiment, a space for the disc tray 12 and the optical pickup 23 to move is arranged on the farther side at the side opposite to the disc insert/eject port 11. The mist M thus again approaches the vicinity of the optical disc 2 with the air current by the rotation of the optical disc 2 after circling inside the housing 3 (arrow Mf in Figs. 20A, 20B). The mist M then rides on the flow of air passing above the label surface 2a of the optical disc 2 and below the information recording surface, and further diffuses inside the housing 3.

In this case, as shown in Fig. 20B, the floating amount (concentration) of the mist M is the highest in the region U surrounded with a dotted line on the downstream side in the rotating direction of the optical disc 2 with the ink discharge portion 37 as a reference. Thus, it is effective to adsorb the mist M in the area where the floating amount (concentration) of the mist M is the highest. Therefore, when printing the inner circumferential side of the optical disc 2, the electrode plate 102 is preferably arranged in the region U (downstream side in the rotating direction of the optical disc 2 with respect to the ink discharge portion 37) where the floating amount (concentration) of the mist M is the highest. The mist M thus can be effectively adsorbed, and the effect of preventing contamination in the housing 3 by the mist inducing unit 101 can be enhanced.

Therefore, in the optical disc device 1 according to the present embodiment, the electrode plate 102 is preferably arranged on the downstream side in the rotating direction of the optical disc 2 with respect to the ink discharge portion 37 of the print head 31.

### <Regarding optical disc device 1A according to first example>

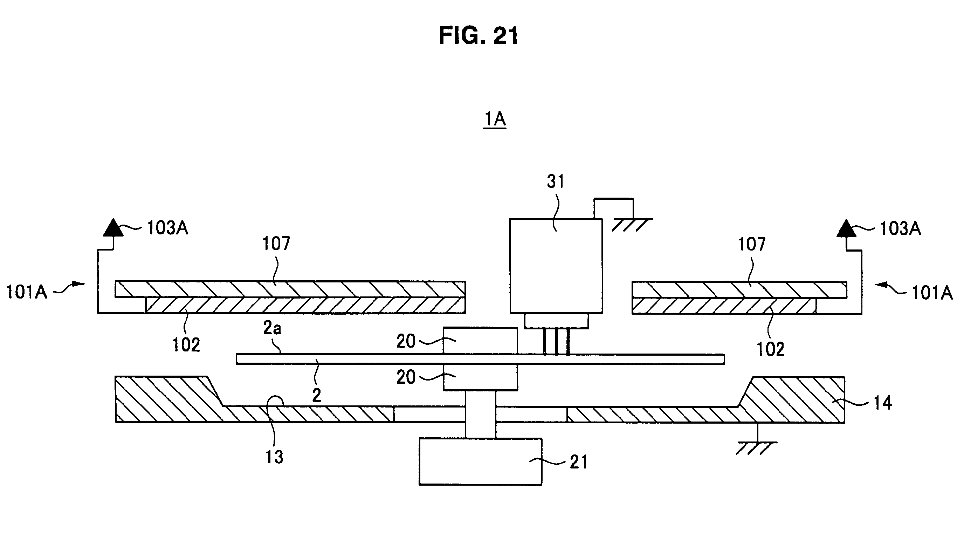

Three examples in which the configuration of the mist inducing unit 101 differs will be described below for the optical disc device 1 according to the first embodiment of the present invention described above. First, the configuration of the optical disc device 1A will be described as a first example of the disc device according to the present embodiment with reference to Fig. 21. Fig. 21 is an explanatory view showing the configuration of the first example of the disc device according to the present embodiment.

The optical disc device 1A is a device in which the optical disc 2 serving as one example of the disc-like recording medium according to the present embodiment is inserted, and printing is performed on the label surface of the inserted optical disc 2. Specifically, as shown in Fig. 21, the optical disc device 1A includes the tray main body 14 serving as one example of a disc mounting unit according to the present embodiment, the print head 31, the spindle motor 21, and the mist inducing unit 101A.

The tray main body 14 includes the disc mounting surface 13 on which the optical disc 2 rotatably supported by the disc attachment unit 20 is mounted. For instance, the surface of the tray main body 14 may be a conductive band by performing conductive painting on the surface of the tray main body 14. If the surface of the tray main body 14 is a conductive band, the surface of the tray main body 14 can be easily made high potential or ground potential.

The print head 31 is arranged on the label surface side (surface on the upper side of the optical disc 2 in Fig. 21) on the side opposite to the recording surface of the optical disc 2, and the ink droplets are discharged from the ink discharge portion 37 towards the label surface of the optical disc 2 mounted on the tray main body 14. The print head 31 is movable in a direction parallel to the radial direction of the optical disc 2, and performs printing on the label surface by discharging the ink droplets with respect to the rotating optical disc 2 while moving from the outer circumferential side towards the inner circumferential side.

The disc attachment unit 20 is coupled to one end of the spindle motor 21. The disc attachment unit 20 is arranged to pass through substantially the center part of the optical disc 2, and rotatably supports the optical disc 2.

The mist inducing unit 101A includes an electrode plate 102 arranged on the lower surface side of the top plate 107, and a high voltage power supply unit 103A for applying high voltage to the electrode plate 102. When the predetermined voltage (e.g., -2 kV) from the high voltage power supply unit 103A to the electrode plate 102, the ink droplets discharged from the ink discharge portion 37 of the print head 31 are induced, and the ink droplets are attached to the surface on the lower side of the electrode plate 102, that is, the surface on the side facing the label surface of the optical disc 2. The electrode plate 102 is a metal plate arranged to cover the optical disc 2 from the label surface side.

The high voltage power supply unit 103A applies the high voltage (e.g., voltage of a few kV) to the portion of collecting the mist of ink droplets. In the first example, the high voltage power supply unit 103A applies high voltage only to the electrode plate 102 to have only the electrode plate 102 as the high potential, and the tray main body 14 is grounded so that the surface of the tray main body 14 is the ground potential.

In the optical disc device 1A having the above configuration, the electrode plate 102 is high potential, and thus the ink droplets are induced to the electrode plate 102 side on the high potential side, and attached to the surface of the electrode plate 102. The tray main body 14 is the ground potential, and thus the attachment of ink droplets to the surface of the tray main body 14 can be suppressed.

According to the optical disc device 1A of the first example of the present embodiment, the contamination of the interior of the disc drive by the scattering of mist can be prevented by absorbing the mist of ink droplets floating inside the disc drive to the electrode plate 102 applied with the high voltage. In particular, in the first example, the electrode plate 102 is made high potential and the tray main body 14 is made ground potential so that the mist is induced and collected on the upper side of the optical disc 2 (label surface side), and the mist can be suppressed from floating to the lower side of the optical disc 2 (recording surface side). Therefore, according to the optical disc device 1A, contamination of the pickup arranged on the recording surface side of the optical disc 2, and the contamination of the tray main body 14 mounted with the optical disc 2 can be prevented. Furthermore, the safety of the user can be ensured since the user of the optical disc device 1A may not apply high voltage to the tray main body 14 having a high possibility of being touched when replacing the optical disc 2.

### <Regarding optical disc device 1B according to second example>

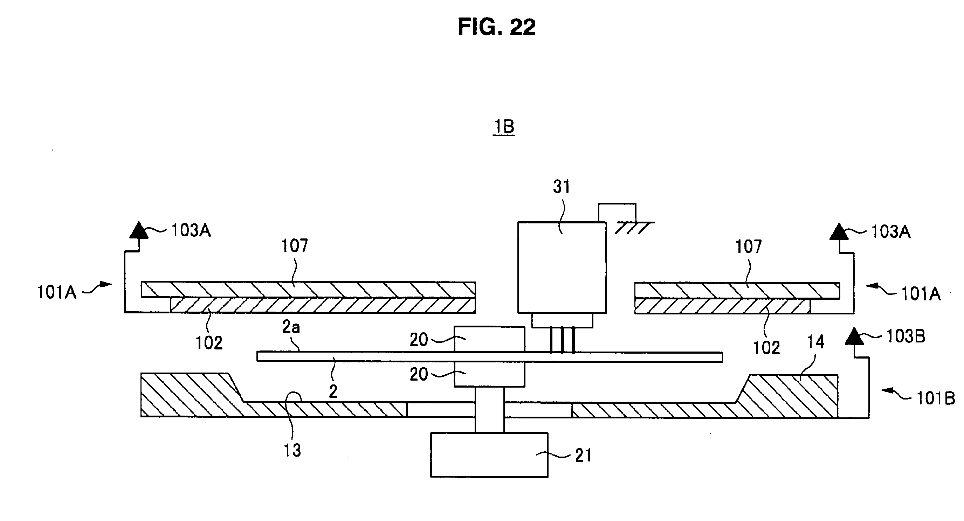

The configuration of the optical disc device 1B will be described as a second example of the disc device according to the present embodiment with reference to Fig. 22. Fig. 22 is an explanatory view showing the configuration of the second example of the disc device according to the present embodiment.

The optical disc device 1B is a device in which the optical disc 2 serving as one example of the disc-like recording medium according to the present embodiment is inserted, and printing is performed on the label surface of the inserted optical disc 2. Specifically, as shown in Fig. 22, the optical disc device 1B includes the tray main body 14 serving as one example of a disc mounting unit according to the present embodiment, the print head 31, the spindle motor 21, and the mist inducing unit 101A, 101B.

The optical disc device 1B according to the second example is similar to the optical disc device 1A according to the first example in the configuring components, but differs from the first example in that not only the electrode plate 102 applied with high voltage by the high voltage power supply unit 103A but the tray main body 14 also functions as the mist inducing unit 101B according to the present embodiment. In other words, in the optical disc device 1B, the high voltage is applied not only to the electrode plate 102 but also to the tray main body 14 from the high voltage power supply unit 103B, so that the mist of ink droplets are also adsorbed to the surface of the tray main body 14.

In the optical disc device 1B having the above configuration, the ink droplets are induced to the electrode plate 102 and the tray main body 14 side on the high potential side and are attached to the surfaces of the electrode plate 102 and the tray main body 14 since the electrode plate 102 and the tray main body 14 are high potential. Since other portions in the disc drive and the optical disc 2 itself are ground potential, the attachment of ink droplets to such portions can be suppressed.

According to the optical disc device 1B of the second example of the present embodiment, the contamination of the interior of the disc drive by the scattering of mist can be prevented by absorbing the mist of ink droplets floating inside the disc device to the electrode plate 102 and the tray main body 14 applied with the high voltage. In particular, in the second example, the electrode plate 102 and the tray main body 14 are made high potential so that the mist is induced and collected on the upper side (label surface side) and the lower side at the periphery of the optical disc 2, and the mist can be suppressed from floating in a wide region in the disc drive. Therefore, according to the optical disc device 1B, the possibility of contamination of the pickup arranged on the recording surface side of the optical disc 2, and the contamination of the tray main body 14 mounted with the optical disc 2 increases compared to the first example, but the collecting ability of the scattered mist can be further enhanced, and the contamination of the disc drive by the scattering of mist can be effectively prevented.

### <Regarding optical disc device 1C according to third example>

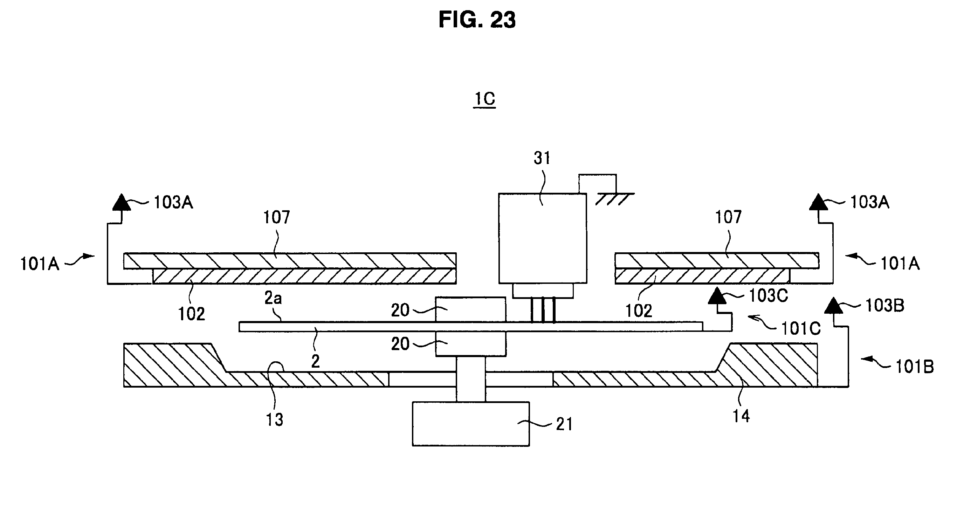

The configuration of the optical disc device 1C will be described as a third example of the disc device according to the present embodiment with reference to Fig. 23. Fig. 23 is an explanatory view showing the configuration of the third example of the disc device according to the present embodiment.

The optical disc device 1C is a device in which the optical disc 2 serving as one example of the disc-like recording medium according to the present embodiment is inserted, and printing is performed on the label surface of the inserted optical disc 2. Specifically, as shown in Fig. 23, the optical disc device 1C includes the tray main body 14 serving as one example of a disc mounting unit according to the present embodiment, the print head 31, the spindle motor 21, and the mist inducing unit 101A, 101B, 101C.

The optical disc device 1C according to the third example is similar to the optical disc devices 1A, 1B according to the first and second examples in the configuring components, but differs from the first and second examples in that not only the electrode plate 102 and the tray main body 14 but the optical disc 2 itself also functions as the mist inducing unit 101C according to the present embodiment. In other words, in the optical disc device 1C, the high voltage is applied not only to the electrode plate 102 and the tray main body 14, but also to the optical disc 2 itself from the high voltage power supply unit 103C, so that the mist of ink droplets are also adsorbed to the surface of the optical disc 2.

In the optical disc device 1C having the above configuration, the ink droplets are induced to the electrode plate 102, the tray main body 14, and the optical disc 2 side on the high potential side and are attached to the surfaces of the electrode plate 102, the tray main body 14, and the optical disc 2 since the electrode plate 102, the tray main body 14, and the optical disc 2 are high potential. Since other portions in the disc drive and the optical disc 2 itself are ground potential, the attachment of ink droplets to such portions can be suppressed.

According to the optical disc device 1C of the third example of the present embodiment, the contamination of the interior of the disc drive by the scattering of mist can be prevented by collecting the mist of ink droplets floating inside the disc drive to the electrode plate 102, the tray main body 14, and the optical disc 2 applied with the high voltage. In particular, in the third example, the optical disc 2 itself is made high potential in addition to the electrode plate 102 and the tray main body 14 so that the mist is induced and collected at the optical disc 2 itself and on the upper side (label surface side) and the lower side at the periphery thereof, and the mist can be suppressed from floating in a wide region in the disc drive. Therefore, according to the optical disc device 1C, the possibility of contamination of the optical disc 2 itself slightly increases compared to the first and second examples, but the collecting ability of the scattered mist can be further enhanced from the second example, and the contamination of the disc drive by the scattering of mist can be effectively prevented.

In the present embodiment, an example in which the print head 31 is grounded (0 V), and the voltage (e.g., -2 kV) is applied to the electrode plate 102, the tray main body 14, and the optical disc 2 has been described, but is not limited thereto. For instance, the voltage may be applied to the electrode plate 102 and the voltage having a polarity opposite to the electrode plate 102 (e.g., + 2 kV opposite from -2 kV) may be applied to the print head 31 to apply voltage to the ink droplets N and the mist M discharged from the print head 31. Thus, the mist can be more easily induced to the electrode plate 102 having a voltage of different polarity by appropriately setting the potentials of the print head 31 and the electrode plate 102 such as applying a greater potential difference, and hence the mist M can be more effectively adsorbed.

In the present embodiment, an example in which the electrode plate 102 is attached to the lower surface side of the chassis plate 17 configuring the housing 3 has been described. However, the attachment area of the electrode plate 102 is not limited thereto. In a case where a structural object is further arranged on the lower surface side of the chassis plate 17, the electrode plate 102 may be attached to the lower part of the structural object that becomes a space where the mist M passes facing the label surface 2a of the optical disc 2.

Furthermore, in the present embodiment, the voltage is preferably applied from the high voltage power supply unit 103 to the electrode plate 102 so that the intensity of the electric field formed in a region of the print head 31, the tray main body 14, and the electrode plate 102 is greater than or equal to 200 kV/m. This is because if the intensity of the electric field is smaller than 200 kV/m, the mist M becomes difficult to be sufficiently collected.

The results of an experiment conducted by the inventors of the present invention regarding the relationship between the electric field intensity and the collecting and adsorbing effect of the mist M will be described below. According to the experiment, in the configuration of the optical disc device 1A described using Fig. 21, the scattering state of the mist M was checked by the extent of contamination of the information recording surface of the optical disc 2 with the electrode plate 102 as the potential of high voltage and the tray main body 14 as the potential of ground, the gap (spaced distance) at a location where the electrode plate 102 and the tray main body 14 is the closest as 4 mm, and the voltage to apply to the electrode plate 102 is changed. As a result, the results shown in table 1 below were obtained.

**[Table 1]**

| Applied voltage [V] | Electric field [kV/m] | Determination | Extent of contamination |
|---|---|---|---|
| 0 | 0 | × | Plenty of ink mist attaches. |
| 400 | 100 | × | Plenty of ink mist attaches. |
| 800 | 200 | △ | Mist attaches, but reduces. |
| 1200 | 300 | ○ | Mist slightly attaches. |
| 1600 | 400 | ⊚ | Few mists attach. |
| 2000 | 600 | ⊚ | Few mists attach. |

As shown in table 1, the effect of mist collection was obtained at the electric field intensity of greater than or equal to 200 kV/m. Furthermore, it was found that the mist can be sufficiently collected to an extent the mist M barely attaches to the information recording surface of the optical disc 2 at the electric field intensity of greater than or equal to 400 kV/m.

In Table 1, the gap (spaced distance) at the location where the electrode plate 102 and the tray main body 14 are the closest is set as a reference as a definition of the electric field intensity, whereas the gap (spaced distance) is set larger than 4 mm such as between 7 and 9 mm at the recess of the disc mounting surface 13 in the tray main body 14. Thus, in the experiment, locations where the electric field intensity of the location is smaller than or equal to about half of the electric field intensity of table 1 exist depending on the difference in locations at the vicinity of the optical disc 2. Therefore, if the electric field intensity at the location of weak electric field is set as a reference, the effect of sufficient mist collection can be obtained as long as the intensity of the electric field is greater than or equal to 100 kV/ m and more preferably greater than or equal to 200 kV/m.

### [Second embodiment]

In the optical disc device 1 according to the first embodiment of the present invention described above, a method of inducing the scattered mist M and adsorbing the mist M to the electrode plate 102, and the like applied with high voltage is used to prevent contamination of the interior of the disc drive by the scattering of the mist M.

In such method, arranging the electrode plate 102 at the top plate 107 facing the label surface (upper surface) of the optical disc 5 is considered as the basic arrangement with respect to the arrangement of the electrode plate 102.

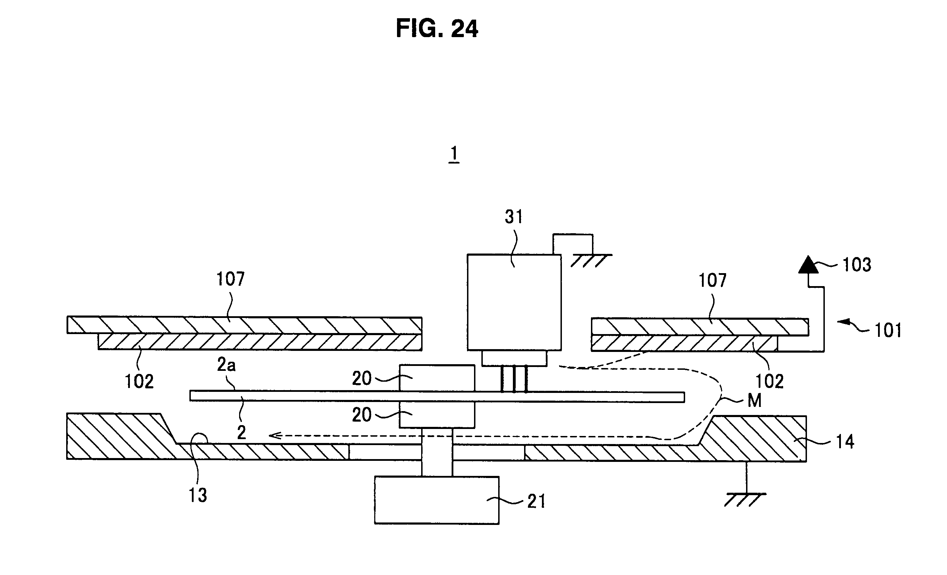

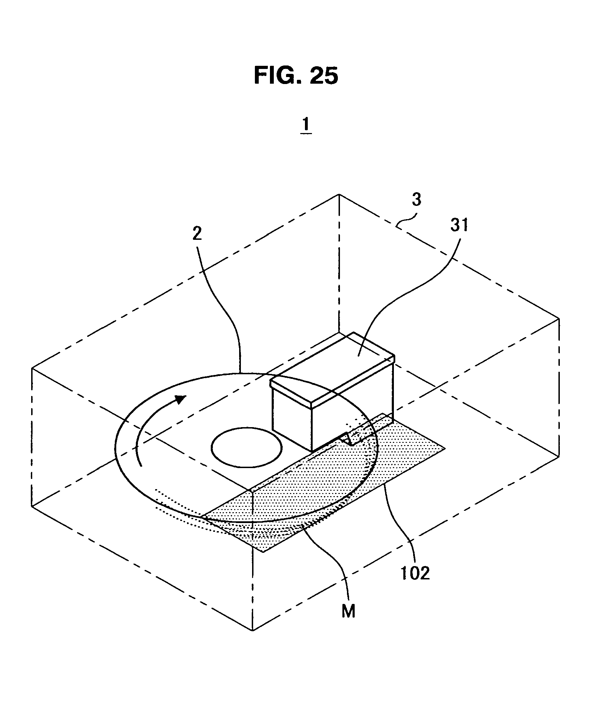

As shown in Figs. 19A to 20B mentioned above, the mist M discharged from the print head 31 diffuses in the drive in three steps (1) to (3) below, as shown in Fig. 24 and Fig. 25, focusing on the flow of mist M in time of outer circumferential printing of the optical disc 5. In Fig. 25, the flow of the mist M and the arrangement of the electrode 102 are schematically illustrated, and thus the description on the structural objects at the periphery of the optical disc 2 such as the top plate 107 and the tray main body 14 is omitted.
(1) The mist M rides on the flow of air by the rotation at above the label surface 2a of the optical disc 2, and scatters towards the downstream side in the rotating direction of the optical disc 2 (Ma of Figs. 19A, 19B).
(2) The mist M rides on the flow of air generated at the side of the optical disc 2 and the structure of the housing 3 at the periphery thereof, and diffuses through the entire housing 3 (Mb of Figs. 19A, 19B).
(3) The mist M rides on the flow of air passing below the information recording surface on the side opposite to the label surface 2a of the optical disc 2 and not only above the label surface 2a of the optical disc 2, and diffuses through the entire housing 3 (Mc of Figs. 19A, 19B).

In the case of the structure in which the electrode plate 102 to be applied with high voltage is arranged on the top plate 107 side and the mist M is adsorbed to the electrode plate 102, the adsorption effect of the mist M is high when the flow of the mist M is state (1).

However, the mist M is not limited to being adsorbed 100% by the electrode plate 102, and the mist M not adsorbed by the electrode plate 102 flows to the side of the optical disc 2 and goes around to the lower surface (information recording surface) side of the optical disc 5 from the side, as shown in Fig. 24, even if of small amount. Furthermore, the mist M diffuses to between the optical disc 5 and the tray main body 14, rides on the flow of air that passes below the information recording surface, and floats between the optical disc 5 and the tray main body 14.

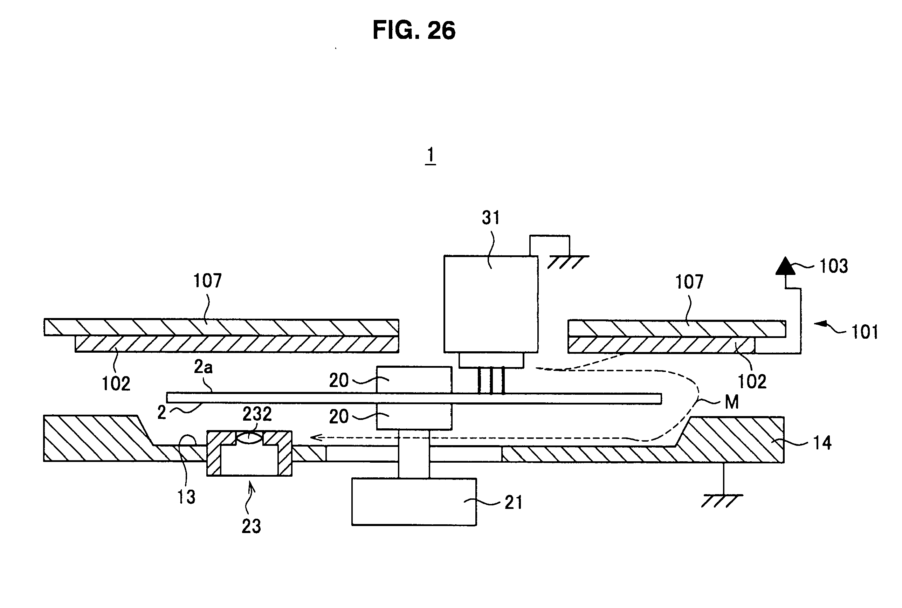

As shown in Fig. 26, the optical pickup 23 is arranged so as to face the information recording surface of the optical disc 2 at the position of the cutout 16 (see Fig. 4) of the tray main body 14 on the lower surface (information recording surface) side of the optical disc 2. Therefore, some of the mist M diffuses between the optical disc 5 and the tray main body 14, rides on the flow of air that passes below the information recording surface, floats between the optical disc 5 and the tray main body 14, and floats in the vicinity of the optical pickup 23. The mist M of one part thereof sometimes attaches to an optical component such as the objective lens 232 of the optical pickup 23, and may consequently degrade the recording and reproducing performance of the optical disc drive such as lower the transmissivity of the optical system.

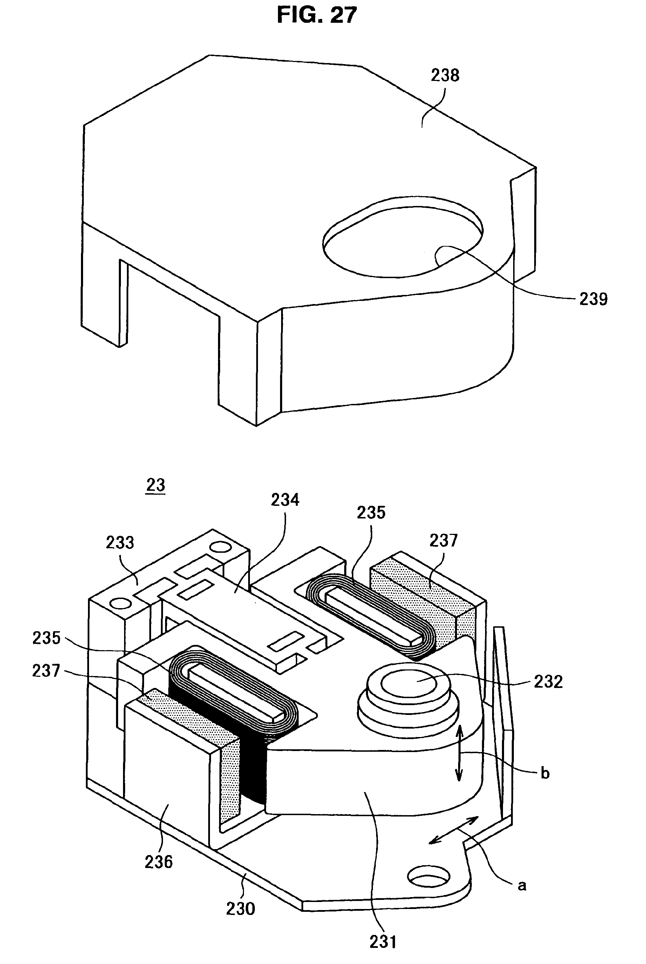

As shown in Fig. 27, the optical pickup 23 includes a pickup base 230, a movable body 231, an objective lens 232, a fixing base part 233, a supporting plate 234, a drive coil 235, a yoke 236, a magnet 237, and a pickup cover 238. The pickup base 231 is coupled to a pickup feeding mechanism (not shown). The movable body 231 is provided to mount the objective lens 232, and the movable body 231 is coupled and supported in a freely oscillating manner in the direction of the arrow a (tracking direction) and in the direction of the arrow b (focusing direction) at the fixing base part 233 to be securely attached to the pickup base 230 by way of the supporting plate 234. The drive coil (tracking coil and focusing coil) 235 is securely attached to the movable body 231. The yoke 236 is fixed on the pickup base 230 side while facing the drive coil 235. The magnet 237 is attached to the yoke 236, where when the servo signal is provided from a servo signal generation circuit (not shown) to the drive coil 235, the movable body 231 oscillates in the direction of the arrow a and in the direction of the arrow b by the change in magnetic force, and the tracking operation and the focusing operation of the objective lens 232 are performed. The pickup cover 238 protects the drive unit (actuator) of the optical pickup 23. The dust, dirt, and the like are prevented from entering inside the disc drive by covering the entire drive unit with the pickup cover 238. A through-hole 239 for passing the laser light exit from the objective lens 232 is formed in the pickup cover 238.

In most cases, the pickup cover 238 is merely mechanically arranged to prevent dust and dirt from entering the optical system in the related art. However, in the optical disc device serving as one example of the disc device according to the present embodiment, the optical pickup is prevented from being contaminated by the mist M floating between the optical disc 5 and the tray main body 14 by setting the potential of the pickup cover 238.

The main droplet N and the mist M of the ink droplets discharged from the print head 31 are in a charged state so as to be induced to the potential of the mist inducing unit 101 having the electrode plate 102 applied with high voltage. The attraction force by the electric field thus acts on the main droplet N and the mist M with respect to the downward direction or the upward direction of the slope of the spatial electric field generated between the print head 31 and the mist inducing unit 101. Therefore, in the present embodiment, a force of avoiding the optical pickup 23 (or does not enter the interior of at least the optical pickup 23) is exerted on the mist M floating between the optical disc 5 and the tray main body 14 using the attraction force by the electric field. Therefore, the mist M floating between the optical disc 5 and the tray main body 14 can suppress the contamination of the optical system of the optical pickup 23.

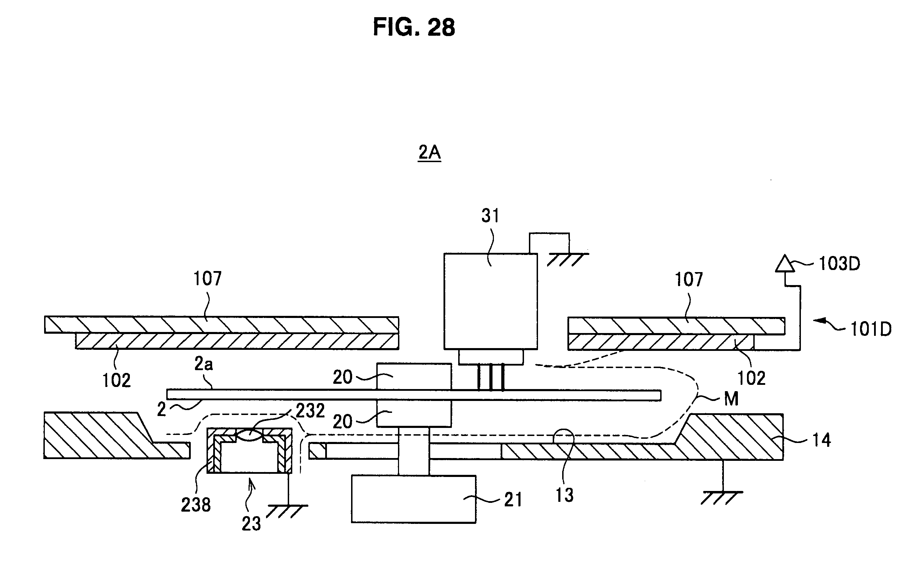

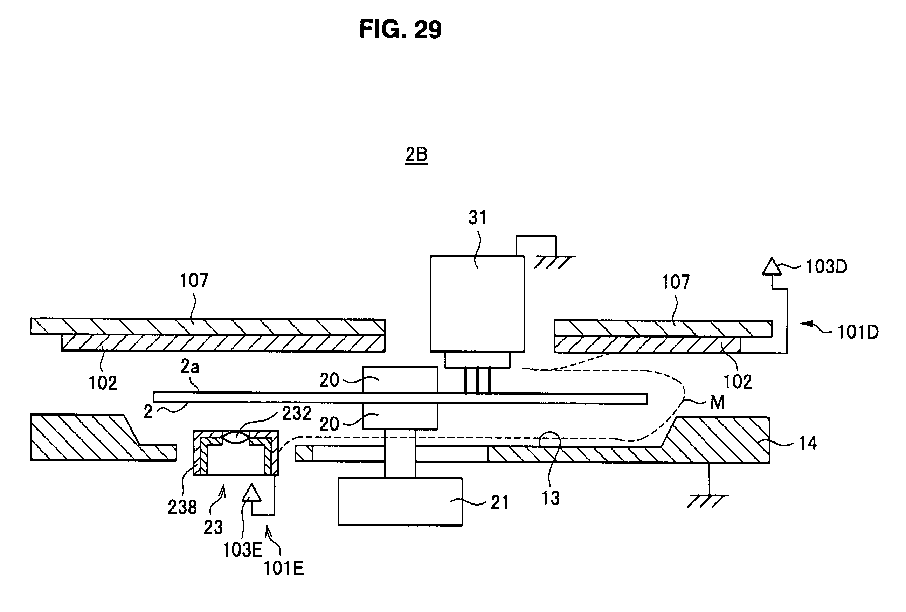

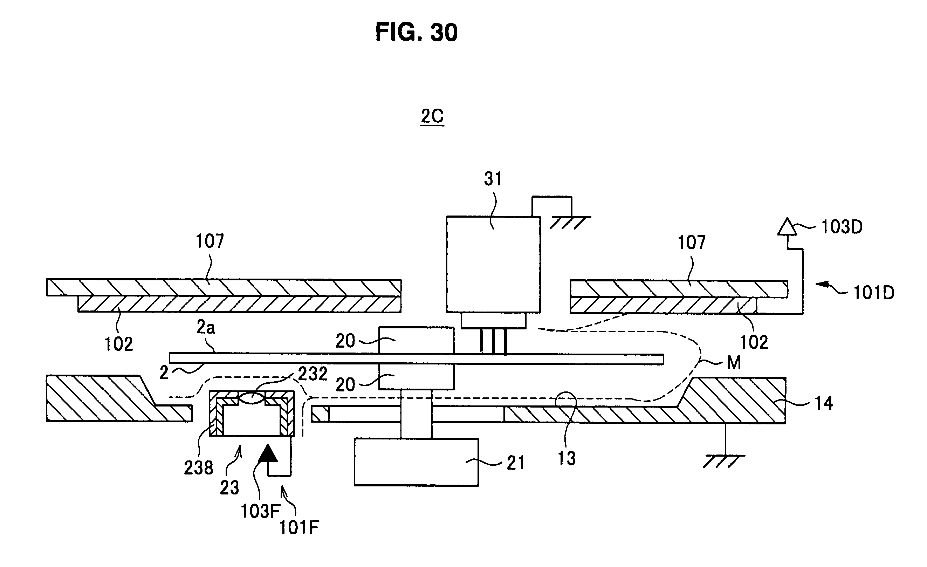

The specific configuration will be hereinafter described for the optical disc devices 2A, 2B, 2C serving as examples of the disc device according to the present embodiment with reference to Fig. 28 to Fig. 30. Fig. 28 is an explanatory view showing a configuration of an optical disc device 2A serving as a first example of the disc device according to the present embodiment. Fig. 29 is an explanatory view showing a configuration of an optical disc device 2B serving as a second example of the disc device according to the present embodiment. Fig. 30 is an explanatory view showing a configuration of an optical disc device 2C serving as a third example of the disc device according to the present embodiment.

### <First example>

First, as shown in Fig. 28, the optical disc device 2A is an example in which the print head 31 and the tray main body 14 are ground potential (0 V), the mist inducing unit 101D is a high potential (e.g., -2 kV) as high voltage is applied by the high voltage power supply unit 103D to the electrode plate 102 attached to the lower surface (surface facing the optical disc 2) side of the top plate 107, and the pickup cover 238 of the optical pickup 23 is ground potential (0 V).

In this case, the potential of the pickup cover 238 is the same potential (0 V) as the potential of the print head 31 according to the charged state of the mist M, and thus the attraction force in the direction towards the optical pickup 23 does not generate with respect to the mist M. As a result, the mist M floating between the optical disc 5 and the tray main body 14 diffuses inside the housing 3 without approaching the optical pickup 23 while riding on the flow of air passing under the information recording surface on the side opposite to the label surface 2a of the optical disc 2. Therefore, according to the optical disc device 2A of the first example, the optical system of the optical pickup 23 can be prevented from being contaminated by the mist M floating between the optical disc 5 and the tray main body 14 without being adsorbed by the electrode plate 102.

In the optical disc device 2A of the first example, the possibility of occurrence of an event where the semiconductor laser and the like in the optical system of the optical pickup 23 gets damaged due to discharge is low as the pickup cover 238 covering the optical pickup 23 is also ground potential (0 V).

### <Second example>

Next, as shown in Fig. 29, the optical disc device 2B is an example in which the print head 31 and the tray main body 14 are ground potential (0 V), the mist inducing unit 101D is a high potential (e.g., -2 kV) as high voltage is applied by the high voltage power supply unit 103D to the electrode plate 102 attached to the lower surface (surface facing the optical disc 2) side of the top plate 107, and the pickup cover 238 of the optical pickup 23 is the potential (e.g., -2 kV) of the same polarity as the electrode plate 102 of the mist inducing unit 101D. In other words, the high voltage is applied to the pickup cover 238 in the second example by the high voltage power supply unit 103E, and the pickup cover 238, the high voltage power supply unit 103E, and the like configure the mist inducing unit 101E for inducing the mist M.

In this case, the potential of the pickup cover 238 is the same potential (-2 kV) as the potential of the electrode plate 102 of the mist inducing unit 101D according to the charged state of the mist M, and thus the attraction force in the direction towards the pickup cover 238 of the optical pickup 23 strongly is generated with respect to the mist M. As a result, the mist M floating between the optical disc 5 and the tray main body 14 is induced by the electric field generated between the print head 31 and the mist inducing unit 101E, brought close to the optical pickup 23, and ultimately adsorbed by the pickup cover 238. As the mist M is adsorbed by the pickup cover 238, the mist M is less likely to enter the optical system inside the optical pickup 23. Furthermore, as the mist M is pulled towards the pickup cover 238 side even if the mist M enters inside the optical pickup 23, the contamination of the objective lens 232 can be suppressed. Therefore, according to the optical disc device 2B of the second example, the optical system of the optical pickup 23 can be prevented from being contaminated by the mist M floating between the optical disc 5 and the tray main body 14 without being adsorbed by the electrode plate 102.

The potential of the electrode plate 102 of the mist inducing unit 101D and the potential of the pickup cover 238 may not be the same potential (e.g., -2 kV), and the effect of adsorbing the mist M to the pickup cover 238 can be obtained even if either one of the potentials is higher or lower as long as the potentials are the same polarity. In the second example, the effect of preventing contamination of the optical system can be further enhanced by applying high voltage only to the side surface portion (or one part thereof) of the pickup cover 238, and grounding the upper surface portion (periphery of the objective lens 232) of the pickup cover 238.

### <Third example>

As shown in Fig. 30, the optical disc device 2C is an example in which the print head 31 and the tray main body 14 are ground potential (0 V), the mist inducing unit 101D is a high potential (e.g., -2 kV) as high voltage is applied by the high voltage power supply unit 103D to the electrode plate 102 attached to the lower surface (surface facing the optical disc 2) side of the top plate 107. Furthermore, the pickup cover 238 of the optical pickup 23 is the potential (e.g., +2 kV) of the opposite polarity as the electrode plate 102 of the mist inducing unit 101D. In other words, the high voltage (e.g., +2 kV) is applied to the pickup cover 238 in the third example by the high voltage power supply unit 103F, and the pickup cover 238, the high voltage power supply unit 103F, and the like configure the mist inducing unit 101F for inducing the mist M.

In this case, the potential of the pickup cover 238 has the opposite polarity from the potential of the electrode plate 102 of the mist inducing unit 101D according to the charged state of the mist M, and thus the repulsive force in the direction away from the optical pickup 23 is generated with respect to the mist M. As a result, the mist M floating between the optical disc 5 and the tray main body 14 diffuses inside the housing 3 so as to avoid the optical pickup 23 without approaching the optical pickup 23 while riding on the flow of air passing under the information recording surface on the side opposite to the label surface 2a of the optical disc 2 and being exerted the repulsive force of the electric field generated between the print head 31 and the mist inducing unit 101F. Therefore, according to the optical disc device 2C of the third example, the optical system of the optical pickup 23 can be prevented from being contaminated by the mist M floating between the optical disc 5 and the tray main body 14 without being adsorbed by the electrode plate 102.

The potential of the electrode plate 102 of the mist inducing unit 101D and the potential of the pickup cover 238 may not be the potential (e.g., -2 kV and +2 kV) of the same absolute value, and the effect of moving the mist M away from the optical pickup 23 can be obtained even if the absolute value of either one of the potentials is greater or smaller as long as the potentials are of opposite polarity.

### [Third embodiment]

In the optical disc device 1 according to the first embodiment of the present invention described above, a method of inducing the scattered mist to the electrode plate or the like applied with high voltage and collecting the mist is used to prevent contamination of the interior of the disc drive by the scattering of the mist of the ink droplets. An optical disc device 3A serving as an example of the disc device according to a third embodiment of the present invention to be described below is common in that the behavior of the ink is controlled using the property that the ink is pulled towards the high potential side from the low potential side. However, the optical disc device 3A according to the present embodiment prevents scattering of the mist by actively pulling the ink discharged from the ink discharge portion towards the label surface of the optical disc 2 rather than collecting the mist as in the first embodiment, and prevents contamination of the interior of the disc drive.

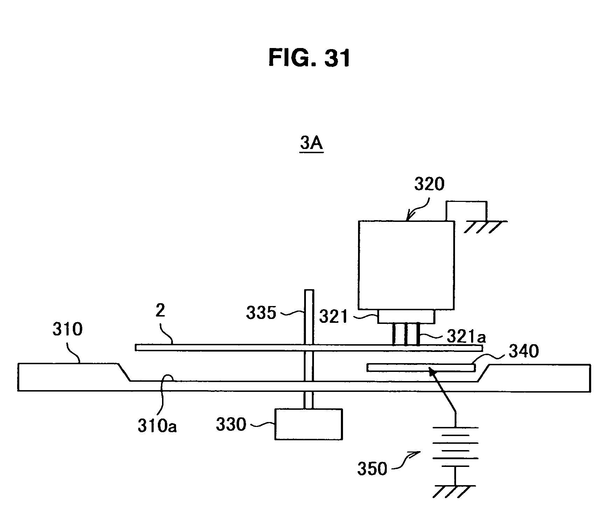

The configuration and the effects of the optical disc device 3A according to the present embodiment will be described below with reference to Fig. 31. Fig. 31 is a side view showing the configuration of the optical disc device 3A according to the present embodiment.

### <Configuration of optical disc device according to third embodiment>

As shown in Fig. 31, the optical disc device 3A according to the present embodiment is a device in which the optical disc 2 serving as one example of the disc-like recording medium according to the present embodiment is inserted, and printing can be performed on the label surface of the inserted optical disc 2. Specifically, as shown in Fig. 31, the optical disc device 3A includes a tray 310 serving as one example of a disc mounting unit according to the present embodiment, an inkjet head 320 serving as one example of a print head according to the present embodiment, a spindle motor 330, an ink discharge auxiliary electrode 340 serving as one example of a mist inducing unit according to the present embodiment, and a power supply 350.

The tray 310 includes a mounting surface 310a on which the optical disc 2 rotatably supported by a spindle shaft 335, to be described later, can be mounted.

The inkjet head 320 is arranged on the label surface (surface on the upper side of the optical disc 2 in Fig. 31) side on the side opposite to the recording surface of the optical disc 2, and discharges the ink 321a from the ink discharge portion 321 towards the label surface of the optical disc 2 mounted on the tray 310. The inkjet head 320 is movable in a direction parallel to the radial direction of the optical disc 2 so as to discharge the ink 321a while moving from the outer circumferential side towards the inner circumferential side with respect to the rotating optical disc 2 to perform printing on the label surface.

The spindle shaft 335 is coupled to one end of the spindle motor 330. The spindle shaft 335 is arranged to pass through substantially the center part of the optical disc 2, and rotatably supports the optical disc 2.

The ink discharge auxiliary electrode 340 has a function of inducing the ink 321a discharged from the ink discharge portion 321 of the inkjet head 320 in the direction of the label surface of the optical disc 2, and reliably attaching the ink 321a to the label surface of the optical disc 2 by being applied with a predetermined voltage from the power supply 350. The ink discharge auxiliary electrode 340 is a metal plate arranged at a position facing the ink discharge portion 321 of the inkjet head 320 through the optical disc 2. In other words, the ink discharge auxiliary electrode 340 is a region between the recording surface of the optical disc 2 and the tray 310, and is arranged at a position facing the ink discharge portion 321.

The power supply 350 applies high voltage (e.g., voltage of a few kV) to the ink discharge auxiliary electrode. In the present embodiment, the power supply 350 is connected to the ink discharge auxiliary electrode 340 and the ink discharge portion 321 so that only the ink discharge auxiliary electrode 340 becomes high potential and the ink discharge portion 321 becomes ground potential by applying high voltage only to the ink discharge auxiliary electrode 340.

In the present embodiment, the ink discharge auxiliary electrode 340 is arranged as the mist inducing unit, but the ink 321a discharged from the ink discharge portion 321 may be induced towards the label surface of the optical disc 2 by directly applying voltage to the optical disc 2. As the space between the optical disc 2 and the tray 310 is actually very narrow, it is sometimes difficult to ensure a space for arranging the ink discharge auxiliary electrode 340. In such a case, the tray 310 may be set to the high potential side by applying high voltage to the tray 310, and the ink 321a discharged from the ink discharge portion 321 may be induced towards the label surface of the optical disc 2.

### <Effects of optical disc device according to third embodiment>

In the optical disc device 3A having the above configuration, the ink 321a is induced from the ink discharge portion 321 on the low potential side towards the ink discharge auxiliary electrode 340 side on the high potential side and attached to the label surface of the optical disc 2 existing on the discharging direction of the ink 321a since the ink discharge auxiliary electrode 340 is high potential.

Therefore, according to the optical disc device 3A of the present embodiment, the scattering and floating of the ink mist are prevented and the contamination of the interior of the disc drive can be prevented by actively pulling the ink 321 a discharged from the ink discharge portion 321 towards the label surface of the optical disc 2.

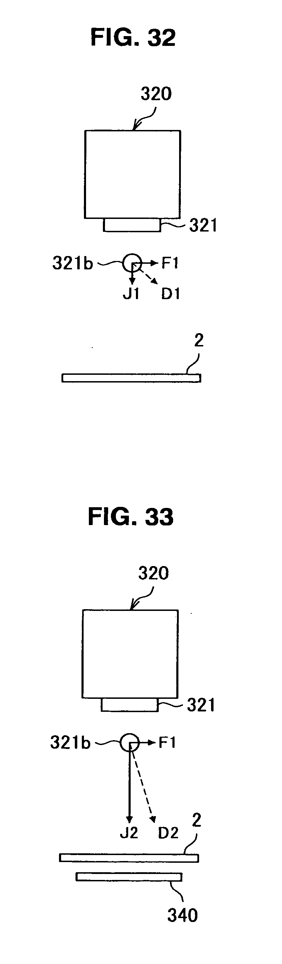

The functions of the ink discharge auxiliary electrode 340 according to the present embodiment will be described in detail below with reference to Fig. 32 and Fig. 33. Fig. 32 is an explanatory view showing the behavior of the ink droplets 321b discharged from the ink discharge portion 321 according to the present embodiment, and shows an example where the ink discharge auxiliary electrode 340 is not arranged, and Fig. 33 is an explanatory view showing the behavior of the ink droplets 321b discharged from the ink discharge portion 321 according to the present embodiment, and shows an example where the ink discharge auxiliary electrode 340 is arranged.

First, as shown in Fig. 32, when the ink discharge auxiliary electrode 340 is not arranged, the ink droplets 321b discharged from the ink discharge portion 321 is applied with a discharge force J1 downward in the vertical direction exerted when discharged from the inkjet head 320, and is also applied with a force F1 by the air current generated by the rotation of the optical disc 2 in the direction towards the rotating direction side of the optical disc 2 in the horizontal direction. Therefore, a force D1, which is the vector sum of the discharge force J1 and the force F1, acts on the ink droplet 321b, and the ink droplet 321b is pulled in the direction of the force D1. In this case, the discharge force J1 exerted on the ink droplet 321b by the inkjet head 320 is weak, and thus the influence of the force F1 in the horizontal direction applied by the air current generated from the rotation of the optical disc 2 is large, whereby the ink droplet is easily pulled in the direction shifted from the direction of the label surface of the optical disc 2. Thus, the ink mist discharged from the ink discharge portion 321 easily scatters inside the disc drive.

As shown in Fig. 33, when the ink discharge auxiliary electrode 340 is arranged, the downward force in the vertical direction applied on the ink droplet 321b is not only the discharge force applied by the inkjet head 320 but also the attraction force by the electric field generated in a region between the ink discharge auxiliary electrode 340 applied with high voltage and the ink discharge portion 321 which is ground potential. In other words, the ink droplet 321b is applied with a force J2, which is the sum of the discharge force exerted from the inkjet head 320 and the attraction force by the electric field, downward in the horizontal direction, and is also applied with a force F1 by the air current generated from the rotation of the optical disc 2 in the direction of the rotating direction side of the optical disc 2 in the horizontal direction. Therefore, a force D2, which is a vector sum of the force J2 and the force F1, acts on the ink droplet 321b and the ink droplet is pulled in the direction of the force D2. In this case, the downward force in the vertical direction applied on the ink droplet 321b is the force of the sum of the discharge force exerted from the inkjet head 320 and the attraction force by the electric field, as described above, and hence the influence of the force F1 pulled by the air current generated from the rotation of the optical disc 2 becomes small, and the ink droplet is easily pulled in the direction closer to the direction of the label surface of the optical disc 2. Thus, the ink mist discharged from the ink discharge portion 321 reliably attaches to the label surface of the optical disc 2 without scattering. In the optical disc device 3A according to the present embodiment, the scattering of the ink mist is prevented and the contamination of the interior of the disc drive can be prevented in such manner.

As described above, according to the present invention, the mist inducing unit for generating the electric field by applying a predetermined voltage to the electrode plate, and inducing and adsorbing the mist with the electrostatic force is arranged. Thus, the mist generated in time of printing can be adsorbed and reliably attached to the label surface, and the mist can be prevented from attaching to and contaminating the pickup lens of the optical pickup and other equipments. Since the non-transmissive unit and the mist adsorbing unit are arranged on the surface facing the optical disc of the electrode plate configuring the mist inducing unit, the moisture of the mist is prevented from attaching to the electrode plate thereby causing short circuit, discharge, and electrification.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

For instance, in the first to the third embodiments described above, an example of a case of the optical disc device has been described for the disc device, but the disc device in the present invention is not limited to the optical disc device, and may be a magnetic disc device, a magnetic optical disc device, and the like. Furthermore, application can be made to other types of electronic devices such as a disc recording or disc reproducing device or an imaging device capable of using such printing device, a personal computer, an electronic dictionary, and a car navigation.

For instance, in the above-described embodiment, an example where the inkjet head serving as one example of the print head is the ground potential has been described by way of example, but the print head of the present invention may not be a ground potential and is merely to be defined at a predetermined potential. This is because in the present invention, the charged state of the ink and the electric field state inside the drive defined by the potential difference and the arrangement of the print head (e.g., inkjet head) and the mist inducing unit (e.g., electrode) operate and the effects can be obtained as long as a predetermined potential difference can be defined between the print head and the mist inducing unit.

## Claims

1. A disc device comprising:
a disc mounting unit having a mounting surface, on which a disc-like recording medium is mounted;
a print head for discharging ink towards a label surface on a side opposite to a recording surface of the disc-like recording medium mounted on the disc mounting unit; and
a mist inducing unit for inducing mist of the ink discharged from the print head when applied with a predetermined voltage.

2. The disc device according to claim 1, wherein the mist inducing unit includes an electrode to be applied with the predetermined voltage.

3. The disc device according to claim 2, wherein the electrode induces the mist of the ink discharged from the print head to attach the mist to the surface of the electrode and collect the mist.

4. The disc device according to claim 3, wherein the electrode is arranged on a downstream side in a rotating direction of the disc-like recording medium with respect to an ink discharge portion of the print head.

5. The disc device according to claim 4, wherein the disc mounting unit is a ground potential.

6. The disc device according to claim 5, further comprising:
a pickup device for recording and/or reproducing information with respect to the recording surface of the disc-like recording medium mounted on the disc mounting unit, wherein
the pickup device includes an objective lens for collecting a laser light emitted from a light source and irradiating the recording surface of the disc-like recording medium with the laser light, an actuator for performing a focusing control and a tracking control of the objective lens, and a cover for covering the actuator, and
the cover is a ground potential.

7. The disc device according to claim 5, further comprising:
a pickup device for recording and/or reproducing information with respect to the recording surface of the disc-like recording medium mounted on the disc mounting unit, wherein
the pickup device includes an objective lens for collecting a laser light emitted from a light source and irradiating the recording surface of the disc-like recording medium with the laser light, an actuator for performing a focusing control and a tracking control of the objective lens, and a cover for covering the actuator, and
the cover is a potential having the same polarity as the electrode.

8. The disc device according to claim 5, further comprising:
a pickup device for recording and/or reproducing information with respect to the recording surface of the disc-like recording medium mounted on the disc mounting unit, wherein
the pickup device includes an objective lens for collecting a laser light emitted from a light source and irradiating the recording surface of the disc-like recording medium with the laser light, an actuator for performing a focusing control and a tracking control of the objective lens, and a cover for covering the actuator, and
the cover is a potential having an opposite polarity from the electrode.

9. The disc device according to claim 5, wherein voltage is applied to the electrode so that an intensity of an electric field generated in a region between the electrode and the disc mounting unit is greater than or equal to 200 kV/m.

10. The disc device according to claim 4, wherein the electrode is arranged on an upper side of the ink discharge portion.

11. The disc device according to claim 2, wherein the electrode is arranged at a position facing an ink discharge portion of the print head by way of the disc-like recording medium.

12. The disc device according to claim 11, wherein the ink discharge portion is a ground potential.
